# EUROPEAN PATENT APPLICATION

(11) **EP 4 665 054 A1**
(43) Date of publication of application: **17.12.2025**
(21) Application number: 24766437.8
(22) Date of filing: 05.03.2024
(51) Int. Cl.: H04W 72/232, H04W 72/04, H04L 5/00

(54) **CROSS-CARRIER SCHEDULING METHOD AND COMMUNICATION APPARATUS**

(30) Priority: 08.03.2023 CN 202310248949
(71) Applicant: Huawei Technologies Co., Ltd., Shenzhen, Guangdong 518129 (CN)
(72) Inventor: HUANG, Wenwen, Shenzhen, Guangdong 518129 (CN); HUA, Meng, Shenzhen, Guangdong 518129 (CN); TIE, Xiaolei, Shenzhen, Guangdong 518129 (CN); ZHOU, Han, Shenzhen, Guangdong 518129 (CN)
(74) Representative: Gill Jennings & Every LLP
(86) International application number: PCT/CN2024/080148
(87) International publication number: WO 2024/183722

(57) **Abstract**

This application provides a cross-carrier scheduling method and a communication apparatus. In the method, a second communication apparatus sends, to a first communication apparatus, indication information used to determine one cell of a plurality of cells as a primary cell or a scheduling cell; and the second communication apparatus sends downlink control information carried on a physical downlink control channel to the first communication apparatus in one cell of the plurality of cells based on a 1^{st} parameter set, and the first communication apparatus monitors the physical downlink control channel in one cell of the plurality of cells based on the 1^{st} parameter set, where the 1^{st} parameter set is a parameter set that is in a plurality of parameter sets of a scheduled cell and that has an association relationship with one cell of the plurality of cells, parameters in the plurality of parameter sets of the scheduled cell are parameters in a search space set, and the plurality of parameter sets of the scheduled cell have an association relationship with the plurality of cells. Therefore, cross-carrier scheduling can be performed during primary cell dynamic switching or scheduling cell dynamic switching, and limitation on scheduling flexibility of cross-carrier scheduling is avoided.

## Description

This application claims priority to Chinese Patent Application No. 202310248949.2, filed with the China National Intellectual Property Administration on March 08, 2023 and entitled "CROSS-CARRIER SCHEDULING METHOD AND COMMUNICATION APPARATUS", which is incorporated herein by reference in its entirety.

### TECHNICAL FIELD

This application relates to the field of communication technologies, and in particular, to a cross-carrier scheduling method and a communication apparatus.

### BACKGROUND

In communication systems, especially a 5th generation (5th generation, 5G) communication system and a communication system evolved after 5G, for example, a 6th generation (6th generation, 6G) communication system, a higher transmission bandwidth and more transceiver antenna arrays are supported. Although the foregoing features provide a wider application scope, energy consumption of a network device is increased. In can be learned that, network energy saving (or referred to as base station energy saving) is of great significance.

Network energy saving may be achieved across a plurality of dimensions such as time domain, frequency domain, and space domain. Primary cell (primary cell, PCell) switching is one of the solutions. Generally, in carrier aggregation (carrier aggregation, CA), the PCell may be used as a scheduling cell (scheduling cell), and the network device performs cross-carrier scheduling in the PCell.

Therefore, how to perform cross-carrier scheduling during PCell dynamic switching is a research focus.

### SUMMARY

This application provides a cross-carrier scheduling method and a communication apparatus, to perform cross-carrier scheduling during PCell dynamic switching or scheduling cell dynamic switching, and avoid limitation on scheduling flexibility of cross-carrier scheduling.

According to a first aspect, this application provides a cross-carrier scheduling method. The method includes:

A first communication apparatus receives indication information sent by a second communication apparatus, where the indication information is used to determine one cell of a plurality of cells as a primary cell or a scheduling cell.

The first communication apparatus monitors a physical downlink control channel in one cell of the plurality of cells based on a 1^{st} parameter set, where the 1^{st} parameter set is a parameter set that is in a plurality of parameter sets of a scheduled cell and that has an association relationship with one cell of the plurality of cells, parameters in the plurality of parameter sets of the scheduled cell are parameters in a search space set, and the plurality of parameter sets of the scheduled cell have an association relationship with the plurality of cells.

According to the cross-carrier scheduling method provided in the first aspect, the second communication apparatus sends the indication information to the first communication apparatus, so that it can be learned, based on the indication information, that one cell of the plurality of cells needs to be used as a PCell or a scheduling cell. The plurality of cells are candidate PCells or candidate scheduling cells.

It can be learned that the solution of this application is applicable to various scenarios of PCell switching or scheduling cell switching.

The parameters in the plurality of parameter sets of the scheduled cell (scheduled cell) are the parameters in the search space set, and the plurality of parameter sets of the scheduled cell have an association relationship with the plurality of cells. Therefore, for each cell of the plurality of cells, a parameter set may be configured for the scheduled cell.

In this way, the second communication apparatus and the first communication apparatus can determine, from the plurality of parameter sets of the scheduled cell, a parameter set that has an association relationship with one cell of the plurality of cells as the 1^{st} parameter set. One cell of the plurality of cells is a PCell determined based on the indication information or a scheduling cell determined based on the indication information.

It can be learned that, during PCell dynamic switching, the second communication apparatus and the first communication apparatus each may correspondingly switch a parameter set of the scheduled cell. In this way, for different PCells, the second communication apparatus and the first communication apparatus each may use a respective aggregation level corresponding to a different parameter set of the scheduled cell and a quantity of physical downlink control channel candidates (physical downlink control channel candidates, PDCCH candidates) corresponding to the aggregation levels, so that the different parameter set may adapt to a size of a control resource set (control resource set, CORESET) in a different PCell, and may not be subject to impact of a maximum quantity of PDCCH candidates determined based on subcarrier spacing (subcarrier spacings, SCSs) of active downlink bandwidth parts (bandwidth parts, BWPs) of PCells before and after switching.

Similarly, during scheduling cell dynamic switching, the second communication apparatus and the first communication apparatus each may correspondingly switch a parameter set of the scheduled cell. In this way, for different scheduling cells, the second communication apparatus and the first communication apparatus each may use a respective aggregation level corresponding to a different parameter set of the scheduled cell and a quantity of PDCCH candidates corresponding to the aggregation level, so that the different parameter set may adapt to a size of a CORESET in a different scheduling cell, and may not be subject to impact of a maximum quantity of PDCCH candidates determined based on an SCS of an active downlink BWP of scheduling cells before and after switching.

The second communication apparatus may send downlink control information (downlink control information, DCI) carried on the physical downlink control channel (physical downlink control channel, PDCCH) to the first communication apparatus in one cell of the plurality of cells based on the 1^{st} parameter set, to perform cross-carrier scheduling. Correspondingly, the first communication apparatus may monitor the physical downlink control channel in one cell of the plurality of cells based on the 1^{st} parameter set. One cell of the plurality of cells is a current PCell or a current scheduling cell.

In conclusion, during PCell dynamic switching or scheduling cell dynamic switching, cross-carrier scheduling is implemented, and limitation on scheduling flexibility of cross-carrier scheduling is avoided.

In a possible design, before the first communication apparatus monitors the physical downlink control channel in one cell of the plurality of cells based on the 1^{st} parameter set, the method further includes:

The first communication apparatus receives first configuration information sent by the second communication apparatus, where the plurality of parameter sets of the scheduled cell are configured by using the first configuration information.

Therefore, before performing cross-carrier scheduling by using the DCI, the second communication apparatus may send the first configuration information to the first communication apparatus. Correspondingly, before monitoring the PDCCH, the first communication apparatus may receive the first configuration information sent by the second communication apparatus, and the first communication apparatus may store the first configuration information until new first configuration information is received again. Therefore, the first configuration information may be historically received information. During valid use of the first configuration information, the first communication apparatus may determine the 1^{st} parameter set based on the stored first configuration information and the stored indication information.

Certainly, the second communication apparatus may alternatively send the first configuration information to the first communication apparatus in real time before or when sending the DCI carried on the PDCCH. Correspondingly, before monitoring the PDCCH, the first communication apparatus may receive the first configuration information sent by the second communication apparatus, and the first communication apparatus may determine the 1^{st} parameter set based on the real-time first configuration information and the indication information.

In a possible design, before the first communication apparatus receives the indication information sent by the second communication apparatus, the method further includes:

The first communication apparatus receives second configuration information sent by the second communication apparatus, where the second configuration information is used to configure the plurality of cells. The plurality of cells are candidate PCells, or the plurality of cells are candidate scheduling cells.

Therefore, during PCell switching, the first communication apparatus may learn, based on the second configuration information, specific cells between which the first communication apparatus can perform PCell dynamic switching.

During scheduling cell switching, the first communication apparatus may learn, based on the second configuration information, specific cells between which the first communication apparatus can perform scheduling cell dynamic switching.

The second configuration information may be the same configuration information as the first configuration information, or may be different configuration information from the first configuration information. This is not limited in this application.

According to a second aspect, this application provides a cross-carrier scheduling method. The method includes:

A second communication apparatus sends indication information to a first communication apparatus, where the indication information is used to determine one cell of a plurality of cells as a primary cell or a scheduling cell.

The second communication apparatus sends downlink control information carried on a physical downlink control channel to the first communication apparatus in one cell of the plurality of cells based on a 1^{st} parameter set, where the 1^{st} parameter set is a parameter set that is in a plurality of parameter sets of a scheduled cell and that has an association relationship with one cell of the plurality of cells, parameters in the plurality of parameter sets of the scheduled cell are parameters in a search space set, and the plurality of parameter sets of the scheduled cell have an association relationship with the plurality of cells.

In a possible design, before the second communication apparatus sends the downlink control information carried on the physical downlink control channel to the first communication apparatus in one cell of the plurality of cells based on the 1^{st} parameter set, the method further includes:

The second communication apparatus sends first configuration information to the first communication apparatus, where the plurality of parameter sets of the scheduled cell are configured by using the first configuration information.

In a possible design, before the second communication apparatus sends the indication information to the first communication apparatus, the method further includes:

The second communication apparatus sends second configuration information to the first communication apparatus, where the second configuration information is used to configure the plurality of cells.

For beneficial effects of the communication method provided in the second aspect and the possible designs of the second aspect, refer to the beneficial effects brought by the first aspect and the possible implementations of the first aspect. Details are not described herein again.

According to a third aspect, this application provides a communication apparatus. The apparatus includes:
a transceiver unit, configured to receive indication information sent by a second communication apparatus, where the indication information is used to determine one cell of a plurality of cells as a primary cell or a scheduling cell.

The transceiver unit is further configured to monitor a physical downlink control channel in one cell of the plurality of cells based on a 1^{st} parameter set, where the 1^{st} parameter set is a parameter set that is in a plurality of parameter sets of a scheduled cell and that has an association relationship with one cell of the plurality of cells, parameters in the plurality of parameter sets of the scheduled cell are parameters in a search space set, and the plurality of parameter sets of the scheduled cell have an association relationship with the plurality of cells.

In a possible design, the transceiver unit is further configured to: before monitoring the physical downlink control channel in one cell of the plurality of cells based on the 1^{st} parameter set, receive first configuration information sent by the second communication apparatus, where the plurality of parameter sets of the scheduled cell are configured by using the first configuration information.

In a possible design, the transceiver unit is further configured to: before receiving the indication information sent by the second communication apparatus, receive second configuration information sent by the second communication apparatus, where the second configuration information is used to configure the plurality of cells.

For beneficial effects of the communication apparatus provided in the third aspect and the possible designs of the third aspect, refer to the beneficial effects brought by the first aspect and the possible implementations of the first aspect. Details are not described herein again.

According to a fourth aspect, this application provides a communication apparatus. The apparatus includes:
a transceiver unit, configured to send indication information to a first communication apparatus, where the indication information is used to determine one cell of a plurality of cells as a primary cell or a scheduling cell.

The transceiver unit is further configured to send downlink control information carried on a physical downlink control channel to the first communication apparatus in one cell of the plurality of cells based on a 1^{st} parameter set, where the 1^{st} parameter set is a parameter set that is in a plurality of parameter sets of a scheduled cell and that has an association relationship with one cell of the plurality of cells, parameters in the plurality of parameter sets of the scheduled cell are parameters in a search space set, and the plurality of parameter sets of the scheduled cell have an association relationship with the plurality of cells.

In a possible design, the transceiver unit is further configured to send first configuration information to the first communication apparatus before sending the downlink control information carried on the physical downlink control channel to the first communication apparatus in one cell of the plurality of cells based on the 1^{st} parameter set, where the plurality of parameter sets of the scheduled cell are configured by using the first configuration information.

In a possible design, the transceiver unit is further configured to send second configuration information to the first communication apparatus before sending the indication information to the first communication apparatus, where the second configuration information is used to configure the plurality of cells.

For beneficial effects of the communication apparatus provided in the fourth aspect and the possible designs of the fourth aspect, refer to the beneficial effects brought by the second aspect and the possible implementations of the second aspect. Details are not described herein again.

In any one of the first aspect to the fourth aspect and any possible design of the first aspect to the fourth aspect, the plurality of parameter sets of the scheduled cell are a plurality of search space set groups of the scheduled cell, one of the search space set groups includes one or more search space sets, and the search space set includes at least a first parameter and a second parameter, where the first parameter indicates an identity of the search space set, and the second parameter indicates an aggregation level of the physical downlink control channel and a quantity of physical downlink control channel candidates corresponding to the aggregation level.

Therefore, the plurality of parameter sets of the scheduled cell may be configured by using the plurality of search space set groups of the scheduled cell. In this way, the second communication apparatus and the first communication apparatus may determine that the 1^{st} parameter set is a search space set (search space set, SS set) in a search space set group that is in the plurality of search space set groups and that has an association relationship with one cell of the plurality of cells. The SS set in the search space set group includes a first parameter and a second parameter. One cell of the plurality of cells is a PCell or scheduling cell determined based on the indication information.

In a PCell dynamic switching solution, in SS sets included in the SS set group, an identity that is of an SS set in the SS set group and that is indicated by a first parameter is the same as an identity of an SS set in a current PCell, that is, an identity of at least one SS set in the SS set group is the same as an identity of at least one SS set in the current PCell. Therefore, the second communication apparatus and the first communication apparatus may determine the SS set in the current PCell based on the first parameter corresponding to the same identity of the SS sets. The current PCell is a cell used as a PCell at a current moment, that is, a cell that is determined based on the indication information and for which one cell of the plurality of cells is used as a PCell.

Therefore, the second communication apparatus sends, in the current PCell based on a second parameter in an SS set in the scheduled cell and an SS set in a current PCell, the DCI carried on the PDCCH to perform cross-carrier scheduling. Correspondingly, the first communication apparatus monitors the PDCCH in the current PCell based on the second parameter in the SS set in the scheduled cell and the SS set in the current PCell. The SS set in the scheduled cell is an SS set in the SS set group, and an identity of the SS set in the scheduled cell is the same as an identity of the SS set in the current PCell.

In a scheduling cell dynamic switching solution, in SS sets included in the SS set group, an identity that is of an SS set in the SS set group and that is indicated by a first parameter is the same as an identity of an SS set in a current scheduling cell, that is, an identity of at least one SS set in the SS set group is the same as an identity of at least one SS set in the current scheduling cell. Therefore, the second communication apparatus and the first communication apparatus may determine the SS set in the current scheduling cell based on the first parameter corresponding to the same identity of the SS sets. The current scheduling cell is a cell used as a scheduling cell at a current moment, that is, a cell that is determined based on the indication information and for which one cell of the plurality of cells is used as a scheduling cell.

Therefore, the second communication apparatus sends, in the current scheduling cell based on a second parameter in an SS set in the scheduled cell and an SS set in a current scheduling cell, the DCI carried on the PDCCH to perform cross-carrier scheduling. Correspondingly, the first communication apparatus monitors the PDCCH in the current scheduling cell based on the second parameter in the SS set in the scheduled cell and the SS set in the current scheduling cell. The SS set in the scheduled cell is an SS set in the SS set group, and an identity of the SS set in the scheduled cell is the same as an identity of the SS set in the current scheduling cell.

In any one of the first aspect to the fourth aspect and any possible design of the first aspect to the fourth aspect, identities of search space sets in the plurality of search space set groups are the same, a quantity of the search space set groups is equal to a quantity of the plurality of cells, and each search space set group has an association relationship with one cell of the plurality of cells; or
identities of search space sets in the plurality of search space set groups are the same, a quantity of the search space set groups is less than a quantity of the plurality of cells, and each search space set group has an association relationship with one or more cells of the plurality of cells.

The plurality of cells are candidate PCells, or the plurality of cells are candidate scheduling cells.

Therefore, identities of SS sets in the plurality of search space set groups may be the same, that is, identities of SS sets in different search space set groups are the same. In some examples, when the identities of the SS sets in the plurality of search space set groups are the same, a quantity of the search space set groups is less than or equal to a quantity of the candidate PCells or a quantity of the candidate scheduling cells.

In addition, to distinguish between the plurality of search space set groups or the SS sets in the plurality of search space set groups, a fourth parameter may be introduced to indicate an association relationship between the plurality of search space set groups and the plurality of cells. The plurality of cells are candidate PCells, or the plurality of cells are candidate scheduling cells.

In some examples, the search space set further includes a fourth parameter, and the fourth parameter is used to determine a cell that has an association relationship with the search space set. In other words, whether fourth parameters in the SS sets are the same may be used as a basis for determining whether the SS sets belong to a same search space set group. SS sets with a same fourth parameter may be considered as belonging to a same search space set group. SS sets with different fourth parameters may be considered as belonging to different search space set groups.

In some examples, a cell that has an association relationship with the search space set may be determined based on whether the search space set includes a fourth parameter. SS sets each including a fourth parameter may be considered as belonging to one search space set group, and SS sets each including no fourth parameter may be considered as belonging to another search space set group.

Therefore, the plurality of search space set groups may be explicitly associated with the candidate PCells or the candidate scheduling cells.

In any one of the first aspect to the fourth aspect and any possible design of the first aspect to the fourth aspect, identities of search space sets in the plurality of search space set groups are different, and the identity of the search space set is used to determine a cell that is in the plurality of cells and that has an association relationship with the search space set. The plurality of cells are candidate PCells, or the plurality of cells are candidate scheduling cells.

Therefore, first parameters in SS sets in the plurality of search space set groups may be different, that is, identities of all SS sets in each search space set group are different. In this way, the plurality of search space set groups may be associated with the candidate PCells or the candidate scheduling cells by using the first parameter.

In any one of the first aspect to the fourth aspect and any possible design of the first aspect to the fourth aspect, the plurality of parameter sets of the scheduled cell are configured in one search space set of the scheduled cell, and the search space set includes at least a first parameter and a plurality of second parameters, where the first parameter indicates an identity of the search space set, and each of the second parameters indicates an aggregation level of the physical downlink control channel and a quantity of physical downlink control channel candidates corresponding to the aggregation level.

Therefore, the plurality of parameter sets of the scheduled cell may be configured by using the first parameter and the plurality of second parameters in the search space set of the scheduled cell. In this way, the second communication apparatus and the first communication apparatus may determine that the 1^{st} parameter set is the first parameter and one of the second parameters that are in the SS set and that have an association relationship with one cell of the plurality of cells. The plurality of cells are candidate PCells, or the plurality of cells are candidate scheduling cells.

In a PCell dynamic switching solution, the identity that is of the SS set and that is indicated by the first parameter in the SS set is the same as an identity of an SS set in a current PCell. Therefore, the second communication apparatus and the first communication apparatus may determine the SS set in the current PCell based on the first parameter in the SS set. The current PCell is a cell used as a PCell at a current moment, that is, a cell that is determined based on the indication information and for which one cell of the plurality of cells is used as a PCell.

Therefore, the second communication apparatus sends, in the current PCell based on a second parameter in an SS set in the scheduled cell and an SS set in a current PCell, the DCI carried on the PDCCH to perform cross-carrier scheduling. Correspondingly, the first communication apparatus monitors the PDCCH in the current PCell based on the second parameter in the SS set in the scheduled cell and the SS set in the current PCell. The SS set in the scheduled cell is the foregoing SS set, and an identity of the SS set in the scheduled cell is the same as an identity of the SS set in the current PCell.

In a scheduling cell dynamic switching solution, the identity that is of the SS set and that is indicated by the first parameter in the SS set is the same as an identity of an SS set in a current scheduling cell. Therefore, the second communication apparatus and the first communication apparatus may determine the SS set in the current scheduling cell based on the first parameter in the SS set. The current scheduling cell is a cell used as a scheduling cell at a current moment, that is, a cell that is determined based on the indication information and for which one cell of the plurality of cells is used as a scheduling cell.

Therefore, the second communication apparatus sends, in the current scheduling cell based on a second parameter in an SS set in the scheduled cell and an SS set in a current scheduling cell, the DCI carried on the PDCCH to perform cross-carrier scheduling. Correspondingly, the first communication apparatus monitors the PDCCH in the current scheduling cell based on the second parameter in the SS set in the scheduled cell and the SS set in the current scheduling cell. The SS set in the scheduled cell is the foregoing SS set, and an identity of the SS set in the scheduled cell is the same as an identity of the SS set in the current scheduling cell.

In any one of the first aspect to the fourth aspect and any possible design of the first aspect to the fourth aspect, a quantity of the second parameters is equal to a quantity of the plurality of cells, and each second parameter has an association relationship with one cell of the plurality of cells; or
a quantity of the second parameters is less than a quantity of the plurality of cells, and each second parameter has an association relationship with one or more cells of the plurality of cells.

The plurality of cells are candidate PCells, or the plurality of cells are candidate scheduling cells.

In this way, the quantity of the second parameters in the SS set is less than or equal to a quantity of the candidate PCells or a quantity of the candidate scheduling cells.

In addition, a fifth parameter may be further introduced to indicate an association relationship between the second parameters and the plurality of cells. The plurality of cells are candidate PCells, or the plurality of cells are candidate scheduling cells.

In some examples, the search space set further includes a fifth parameter, and the fifth parameter indicates a cell that has an association relationship with each second parameter in the search space set. For example, the fifth parameter is one bit, and the fifth parameter is included in each second parameter.

In some examples, an association relationship between a second parameter and the candidate PCells or the candidate scheduling cells may be determined based on whether the second parameter in the SS set includes a fifth parameter.

In some examples, an association relationship between the second parameters and the candidate PCells or the candidate scheduling cells may be determined according to a preset rule.

Therefore, the plurality of second parameters may be explicitly or implicitly associated with the candidate PCells or the candidate scheduling cells.

In any one of the first aspect to the fourth aspect and any possible design of the first aspect to the fourth aspect, the plurality of parameter sets of the scheduled cell are configured by using a plurality of bandwidth parts of the scheduled cell, configuration information of one of the bandwidth parts includes one or more search space sets, and the search space set includes at least a first parameter and a second parameter, where the first parameter indicates an identity of the search space set, and the second parameter indicates an aggregation level of the physical downlink control channel and a quantity of physical downlink control channel candidates corresponding to the aggregation level.

Therefore, the plurality of parameter sets of the scheduled cell may be configured by using the plurality of BWPs of the scheduled cell. In this way, the second communication apparatus and the first communication apparatus may determine that the 1^{st} parameter set is an SS set in a BWP that is in the plurality of BWPs and that has an association relationship with one cell of the plurality of cells. The SS set in the BWP includes a first parameter and a second parameter. The plurality of cells are candidate PCells, or the plurality of cells are candidate scheduling cells.

In a PCell dynamic switching solution, in SS sets in the BWP, an identity that corresponds to an SS set in the BWP and that is indicated by a first parameter is the same as an identity of an SS set in a current PCell, that is, an identity of at least one SS set in the BWP is the same as an identity of at least one SS set in the current PCell. Therefore, the second communication apparatus and the first communication apparatus may determine the SS set in the current PCell based on the first parameter corresponding to the same identity of the SS sets in the BWP. The current PCell is a cell used as a PCell at a current moment, that is, a cell that is determined based on the indication information and for which one cell of the plurality of cells is used as a PCell.

Therefore, the second communication apparatus sends, in the current PCell based on a second parameter in an SS set in the scheduled cell and an SS set in a current PCell, the DCI carried on the PDCCH to perform cross-carrier scheduling. Correspondingly, the first communication apparatus monitors the PDCCH in the current PCell based on the second parameter in the SS set in the BWP in the scheduled cell and the SS set in the current PCell. The SS set in the BWP in the scheduled cell is an SS set in the BWP, and an identity of the SS set in the scheduled cell is the same as an identity of the SS set in the current PCell.

In a scheduling cell dynamic switching solution, in SS sets in the BWP, an identity that corresponds to an SS set in the BWP and that is indicated by a first parameter is the same as an identity of an SS set in a current scheduling cell, that is, an identity of at least one SS set in the BWP is the same as an identity of at least one SS set in the current scheduling cell. Therefore, the second communication apparatus and the first communication apparatus may determine the SS set in the current scheduling cell based on the first parameter corresponding to the same identity of the SS sets. The current scheduling cell is a cell used as a scheduling cell at a current moment, that is, a cell that is determined based on the indication information and for which one cell of the plurality of cells is used as a scheduling cell.

Therefore, the second communication apparatus sends, in the current scheduling cell based on a second parameter in an SS set in the scheduled cell and an SS set in a current scheduling cell, the DCI carried on the PDCCH to perform cross-carrier scheduling. Correspondingly, the first communication apparatus monitors the PDCCH in the current scheduling cell based on the second parameter in the SS set in the BWP in the scheduled cell and the SS set in the current scheduling cell. The SS set in the scheduled cell is an SS set in the BWP, and an identity of the SS set in the scheduled cell is the same as an identity of the SS set in the current scheduling cell.

In any one of the first aspect to the fourth aspect and any possible design of the first aspect to the fourth aspect, a quantity of the bandwidth parts is equal to a quantity of the plurality of cells, and each bandwidth part has an association relationship with one cell of the plurality of cells; or
a quantity of the bandwidth parts is less than a quantity of the plurality of cells, and each bandwidth part has an association relationship with one or more cells of the plurality of cells.

The plurality of cells are candidate PCells, or the plurality of cells are candidate scheduling cells.

In this way, the quantity of the BWPs is less than or equal to a quantity of the candidate PCells or a quantity of the candidate scheduling cells.

In addition, a sixth parameter may be further introduced to indicate an association relationship between the BWPs and the plurality of cells. The plurality of cells are candidate PCells, or the plurality of cells are candidate scheduling cells.

In some examples, the search space set further includes a sixth parameter, and the sixth parameter indicates a cell that has an association relationship with the search space set of the BWP. For example, the sixth parameter indicates a specific candidate primary cell that is in the plurality of cells and that has an association relationship with the search space set. For another example, the sixth parameter indicates a specific candidate scheduling cell that is in the plurality of cells and that has an association relationship with the search space set.

In some examples, an association relationship between the search space set of the BWP and the candidate PCells or the candidate scheduling cells may be determined based on whether the search space set includes a sixth parameter.

In some examples, an association relationship between the search space set of the BWP and the candidate PCells or the candidate scheduling cells may be determined according to a preset rule.

Therefore, search space sets corresponding to the plurality of BWPs may be explicitly or implicitly associated with the candidate PCells or the candidate scheduling cells.

In any one of the first aspect to the fourth aspect and any possible design of the first aspect to the fourth aspect, the second configuration information includes at least a third parameter;

The third parameter indicates a cell identity of a candidate primary cell or a cell identity of a candidate scheduling cell.

Alternatively, whether each cell is a candidate PCell or a candidate scheduling cell is determined based on whether configuration information of each cell carries a third parameter. For example, if configuration information of a cell includes a third parameter, it indicates that the cell is a candidate PCell or a candidate scheduling cell.

Alternatively, whether each cell is a candidate PCell or a candidate scheduling cell is determined based on a quantity of cell identities included in a third parameter in configuration information of each cell. For example, the third parameter includes two cell identities of each cell. When the indication information is used to determine a cell 1 as a primary cell or a scheduling cell, a cell identity of the cell 1 is a first preset identity, and a cell identity of a cell 2 is a third preset identity. When the indication information is used to determine a cell 2 as a primary cell or a scheduling cell, a cell identity of the cell 2 is a first preset identity, and a cell identity of a cell 1 is a second preset identity.

Therefore, the candidate PCells or the candidate scheduling cells may be indicated in a plurality of manners.

In any one of the first aspect to the fourth aspect and any possible design of the first aspect to the fourth aspect, the indication information is carried in the downlink control information or medium access control-control element signaling.

In any one of the first aspect to the fourth aspect and any possible design of the first aspect to the fourth aspect, the configuration information is carried in radio resource control signaling.

According to a fifth aspect, this application provides a communication system, including the first communication apparatus configured to perform the method according to any one of the first aspect and the possible designs of the first aspect, and a second communication apparatus configured to perform the method according to any one of the second aspect and the possible designs of the second aspect.

According to a sixth aspect, this application provides a communication apparatus. The communication apparatus includes a transceiver, a processor, and a memory. The memory stores an executable program or instructions. The processor is configured to control the transceiver to send and receive a signal, and the processor is configured to invoke and run the executable program or the instructions stored in the memory, to cause the processor to implement the method according to any one of the foregoing aspects and the possible designs of the aspect.

According to a seventh aspect, this application provides a communication apparatus, including a processor. The processor is configured to invoke an executable program or instructions in a memory, to cause the communication apparatus to perform the method according to any one of the foregoing aspects and the possible designs of the aspect.

Optionally, the communication apparatus further includes the memory. The memory is configured to store the executable program or the instructions. The processor is coupled to the memory through an interface.

According to an eighth aspect, this application provides a chip apparatus, including a processor, configured to invoke an executable program or instructions in a memory, to cause the processor to perform the method according to any one of the foregoing aspects and the possible designs of the aspect.

Optionally, the processor is coupled to the memory through an interface.

According to a ninth aspect, this application provides a chip, including an interface circuit and a logic circuit. The interface circuit is configured to receive a signal from a chip other than the chip and transmit the signal to the logic circuit, or send a signal from the logic circuit to a chip other than the chip. The logic circuit is configured to implement the method according to any one of the foregoing aspects and the possible designs of the aspect.

According to a tenth aspect, this application provides a readable storage medium. The readable storage medium stores an executable program or instructions, and the executable program or the instructions are set to perform the method according to any one of the foregoing aspects and the possible designs of the aspect.

According to an eleventh aspect, this application provides a computer program product. When the computer program product runs on a computer, the computer is caused to perform the method according to any one of the foregoing aspects and the possible designs of the aspect.

### BRIEF DESCRIPTION OF DRAWINGS

FIG. 1 is a diagram of a PDCCH monitoring occasion (monitoring occasion, MO);
FIG. 2 is a diagram of cross-carrier scheduling;
FIG. 3 is a diagram of cross-carrier scheduling;
FIG. 4 is a diagram of a PCell switching solution;
FIG. 5 is a diagram of an architecture of a communication system according to an embodiment of this application;
FIG. 6 is an interaction flowchart of a cross-carrier scheduling method according to an embodiment of this application;
FIG. 7 is a diagram of a plurality of SS set groups of a scheduled cell according to an embodiment of this application;
FIG. 8 is a diagram of association relationships between a plurality of cells and a plurality of SS set groups according to an embodiment of this application;
FIG. 9 is a diagram of a plurality of SS set groups of a scheduled cell according to an embodiment of this application;
FIG. 10 is a diagram of a plurality of second parameters in an SS set in a scheduled cell according to an embodiment of this application;
FIG. 11 is a diagram of association relationships between a plurality of cells and a plurality of BWPs according to an embodiment of this application;
FIG. 12 is a diagram of a structure of a communication apparatus according to an embodiment of this application;
FIG. 13 is a diagram of a structure of a communication apparatus according to an embodiment of this application;
FIG. 14 is a diagram of a hardware structure of a communication apparatus according to an embodiment of this application; and
FIG. 15 is a diagram of a hardware structure of a communication apparatus according to an embodiment of this application.

### DESCRIPTION OF EMBODIMENTS

In this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may represent: a, b, c, a combination of a and b, a combination of a and c, a combination of b and c, or a combination of a, b and c, where each of a, b, and c may be in a singular form or a plural form. In addition, the terms "first" and "second" are merely used for a purpose of description, and shall not be understood as an indication or implication of relative importance.

Some terms in this application are first described below, to help a person skilled in the art have a better understanding.

### 1. Primary cell (primary cell, PCell) and secondary cell (secondary cell, SCell)

A terminal device in a wireless communication system may communicate with a plurality of serving cells during carrier aggregation configuration, to increase an available bandwidth and a data rate that are used for the terminal device. During carrier aggregation configuration, one primary cell and one or more secondary cells are included.

The PCell is a cell in which a user equipment (user equipment, UE) performs an initial connection establishment process, a cell in which a radio resource control (radio resource control, RRC) connection re-establishment process is initiated, or a cell specified in a handover (handover) process.

A component carrier (component carrier, CC) corresponding to the PCell is referred to as a primary component carrier (primary component carrier, PCC). A downlink carrier of the PCell is referred to as a downlink primary component carrier (downlink primary component carrier, DL PCC). An uplink carrier of the PCell is referred to as an uplink primary component carrier (uplink primary component carrier, UL PCC).

The SCell is a radio resource that is additionally configured during carrier aggregation configuration in addition to the primary cell, and may be added during RRC configuration or reconfiguration. Once an RRC connection is established, the SCell may be configured to provide an additional radio resource.

A component carrier corresponding to the SCell is referred to as a secondary component carrier (secondary component carrier, SCC). A downlink carrier of the SCell is referred to as a downlink secondary component carrier (downlink secondary component carrier, DL SCC). An uplink carrier of the SCell is referred to as an uplink secondary component carrier (uplink secondary component carrier, UL SCC).

The component carrier mentioned in this application may also be referred to as a carrier.

### 2. Master cell group (master cell group, MCG) and secondary cell group (secondary cell group, SCG)

In a dual connectivity (dual connectivity, DC) scenario, the MCG and the SCG are introduced.

The MCG may include one primary cell and one or more secondary cells.

Similarly, the SCG may include one primary secondary cell group cell (primary SCG cell, PSCell) and one or more SCells. The PSCell may be considered as a primary cell in the SCG, that is, a cell that is in the SCG and that is randomly accessed by the terminal device. The SCell is also a radio resource that is additionally configured in the SCG in addition to the PSCell, and may be added during RRC reconfiguration or reconfiguration.

A relationship between the cells in the MCG may be carrier aggregation (carrier aggregation, CA). A relationship between the cells in the SCG may also be CA. CA is to aggregate two or more CCs to support a higher transmission bandwidth.

In addition, a special cell (special cell, Spcell) is further defined for ease of description. In the dual connectivity scenario, the Spcell may be the PCell of the MCG, or may be the PSCell of the SCG. In a non-dual-connectivity scenario, the Spcell is the PCell.

### 3. Physical downlink control channel (physical downlink control channel, PDCCH) monitoring mechanism

A PDCCH is used to carry downlink control information (downlink control information, DCI). The DCI may include uplink or downlink scheduling information. The UE needs to periodically monitor the PDCCH to obtain scheduling information. A PDCCH monitoring periodicity may be one slot (slot).

When the UE detects that the DCI includes scheduling information, if the scheduling information is the downlink scheduling information, the UE may receive data through a physical downlink shared channel (physical downlink shared channel, PDSCH) based on the scheduling information; or if the scheduling information is the uplink scheduling information, the UE may send data through a physical uplink shared channel (physical uplink shared channel, PUSCH) based on the scheduling information.

The DCI may further include control information such as an uplink power control command word and a slot format. The DCI sent through the PDCCH may be in different DCI formats (formats), and different DCI formats may be scrambled by using different radio network temporary identifiers (radio network temporary identifiers, RNTIs).

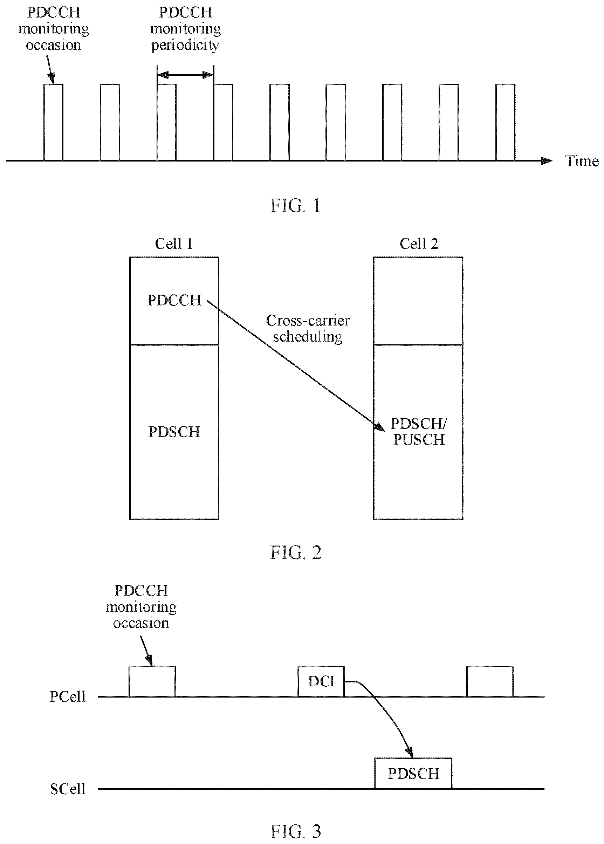

A PDCCH monitoring occasion is determined based on a search space set (search space set, SS set). One SS set may be used to define a group of PDCCH candidates (PDCCH candidates). As shown in FIG. 1, each block represents a PDCCH monitoring occasion (monitoring occasion, MO). In one PDCCH monitoring occasion, there may be one or more PDCCH candidates. In addition, the PDCCH monitoring occasion may also be referred to as a PDCCH candidate location.

A network device may configure at least one SS set for the UE in each cell, and the UE monitors the PDCCH based on the SS set on an active downlink bandwidth part (bandwidth part, BWP) of an active cell. In some examples, the UE may determine a PDCCH monitoring occasion based on configuration information of the SS set. Therefore, the UE may monitor the PDCCH on the PDCCH monitoring occasion.

Configuration information of each SS set includes at least one of the following parameters:
(1) searchSpaceId represents an identity of the SS set, and identifies the SS set.

In some examples, a maximum of 10 SS sets may be configured on each downlink bandwidth part of one cell, and a maximum of four downlink BWPs may be configured for one cell. In other words, a maximum of 40 search space sets may be configured for one cell. searchSpaceId varies with different BWPs of one cell, and searchSpaceId in different cells may be the same, that is, a value of searchSpaceId is at a cell level. For example, an identity of an SS set in one cell may be configured as any one of 1, 2, and 3, and an identity of an SS set in another cell may also be configured as any one of 1, 2, and 3.

(2) controlResourceSetId represents an identity of a control resource set (control resource set, CORESET) associated with the SS set.

The CORESET represents a time-frequency resource set used to carry a PDCCH. One CORESET includes several consecutive or non-consecutive resource blocks (resource blocks, RBs) in frequency domain, and includes one or more consecutive symbols in time domain. In some examples, the UE may monitor, based on the configuration information of the SS set, for example, a monitoring periodicity, a monitoring offset, or an intra-slot PDCCH monitoring pattern (pattern), the PDCCH on the CORESET associated with the SS set.
(3) monitoringSlotPeriodicityAndOffset represents a PDCCH monitoring periodicity Ks and a PDCCH monitoring offset Os. Ks and Os may be in a unit of a slot (slot). For example, if Ks is one slot, the terminal device needs to monitor the PDCCH in each slot.
(4) monitoringSymbolsWithinSlot represents an intra-slot PDCCH monitoring pattern (pattern) or an intra-slot PDCCH monitoring symbol, and indicates a start symbol of a CORESET associated with the SS set in a slot in which the PDCCH is monitored.
(5) duration represents duration Ts, and indicates a quantity of consecutive slots in which the SS set exists. Ts is less than Ks, and Ts may be one slot. For example, if Ks is four slots, and Ts is three slots, it indicates that the terminal device monitors the PDCCH in three consecutive slots in every four slots.
(6) nrofCandidates represents an aggregation level and a quantity of PDCCH candidates (PDCCH candidates) corresponding to the aggregation level.
(7) searchSpaceType represents a type of the SS set, and indicates that the SS set is a common search space set (common search space set, CSS set), referred to as a CSS for short, or the SS set is a UE-specific search space set (UE-specific search space set, USS set), referred to as a USS for short.

If the type of the SS set is the CSS, the network device further configures a DCI format, for example, a DCI format 0_0, a DCI format 1_0, a DCI format 2_0, a DCI format 2_1, a DCI format 2_2, a DCI format 2_3, a DCI format 2_4, a DCI format 2_5, or a DCI format 2_6.

If the type of the SS set is the USS, the network device also configures a DCI format, for example, a DCI format 0_0, a DCI format 1_0, a DCI format 0_1, a DCI format 1_1, a DCI format 0_2, a DCI format 1_2, a DCI format 3_0, a DCI format 3_1, or the like.

### 4. Cross-carrier scheduling, scheduling cell (scheduling cell), and scheduled cell (scheduled cell)

Cross-carrier scheduling means that PDSCH data transmission or PUSCH data transmission in one cell is scheduled by a PDCCH of another cell. As shown in FIG. 2, a PDCCH of a cell 1 schedules PDSCH data transmission in a cell 2.

In this application, a cell in which the DCI is sent through the PDCCH is referred to as the scheduling cell, and a cell in which data scheduled by using the DCI is sent through the PDSCH or the PUSCH is referred to as the scheduled cell.

Generally, a PCell is used as the scheduling cell, an SCell is used as the scheduled cell, and the network device may schedule data transmission in the SCell through a PDCCH of the PCell. Alternatively, one SCell is used as the scheduling cell, another SCell is used as the scheduled cell, and the network device may schedule data transmission in the another SCell through a PDCCH of the SCell. In some scenarios, alternatively, an SCell is used as the scheduling cell, a PCell is used as the scheduled cell, and the network device and the terminal device support scheduling data transmission in the PCell through a PDCCH of the SCell.

For example, the network device may send the DCI in the scheduling cell, where the DCI may include a carrier indicator field (carrier indicator field, CIF), and the CIF indicates a scheduled cell scheduled by using the DCI. Different values of the CIF correspond to different scheduled cells. The UE monitors the PDCCH in the scheduling cell. Based on the received DCI, the UE receives the PDSCH or sends the PUSCH in a scheduled cell indicated by the CIF.

Before performing cross-carrier scheduling by using the DCI, the network device may configure a cell parameter of each cell for the UE. For example, a parameter schedulingcellInfo is used to configure whether the cell is a scheduling cell or a scheduled cell.

In some examples, in a cell parameter of a cell, when schedulingcellInfo is configured as "own", it indicates that the cell is a scheduling cell. In this case, a parameter cif-Presence is further configured to indicate whether the DCI includes the CIF. When schedulingcellInfo is configured as "other", it indicates that the cell is a scheduled cell. In this case, a parameter schedulingcellId is further configured to indicate a cell identity (identity, ID) of a scheduling cell, namely, a specific cell that can schedule the cell. When the cell is a scheduled cell, a parameter cif-InSchedulingcell is further configured to indicate a value corresponding to the cell in a CIF field of the scheduling cell. For different cells, the network device may separately configure the foregoing parameters for the UE. Based on the foregoing parameters, in a multi-carrier scenario, a same scheduling cell may be configured for different scheduled cells, and when the network device performs cross-carrier scheduling by using the DCI, different values of the CIF correspond to different scheduled cells.

According to the foregoing descriptions of the search space set, one or more SS sets may be separately configured in the scheduling cell and the scheduled cell, and an identity of an SS set in each cell is independently configured. The network device sends the DCI in the scheduling cell by using an SS set, to perform cross-carrier scheduling. An identity searchSpaceId of the SS set needs to be the same as an identity searchSpaceId of one SS set in the scheduled cell. That is, for cross-carrier scheduling, only when an identity of at least one SS set in the scheduling cell is the same as an identity of at least one SS set in the scheduled cell, the network device can send the DCI in the scheduling cell by using the SS set to indicate data transmission in the scheduled cell. It may be considered that there is an association relationship between the two SS sets. In addition, only searchSpaceId and nrofCandidates need to be configured for the SS set in the scheduled cell. Specifically, the network device determines a PDCCH monitoring occasion based on the SS set in the scheduling cell, and sends the DCI in the scheduling cell based on the parameter nrofCandidates of the SS set in the scheduled cell, to perform cross-carrier scheduling. The terminal device determines a PDCCH monitoring occasion based on the SS set in the scheduling cell, and monitors the PDCCH on a CORESET in the scheduling cell based on the parameter nrofCandidates of the SS set in the scheduled cell. Specifically, transmission of the PDCCH is implemented in a form of a control channel element (control channel element, CCE). The CORESET in the scheduling cell may include one or more CCEs, and one CCE may include several resource elements (resource elements, REs). The terminal device determines an index of the CCE based on parameters such as a quantity of the CCEs of the CORESET in the scheduling cell, an aggregation level configured by using the parameter nrofCandidates of the scheduled cell, and a quantity of PDCCH candidates corresponding to the aggregation level, and determines a resource location of the PDCCH candidate in the CORESET based on the index of the CCE, the aggregation level, and a mapping relationship between a resource element group (resource element group, REG) and the CCE, to perform PDCCH blind detection. Correspondingly, the network device determines the resource location of the PDCCH candidate in the CORESET, and sends the DCI.

For example, there are two SS sets whose IDs are 1 and 2 on an active downlink BWP of the scheduling cell, and there are two SS sets whose IDs are 1 and 3 on an active downlink BWP of the scheduled cell. In this case, the network device may send the DCI in the scheduling cell by using the SS set 1 to indicate data transmission in the scheduled cell. Specifically, the network device determines a PDCCH monitoring occasion based on the SS set whose ID is 1 in the scheduling cell, and sends the DCI on the PDCCH monitoring occasion in the scheduling cell based on the parameter nrofCandidates of the SS set whose ID is 1 in the scheduled cell, to perform cross-carrier scheduling.

As shown in FIG. 3, for example, the scheduling cell is a PCell, and there is an association relationship between an SS set in the PCell and an SS set in an SCell (that is, identities of the SS sets are the same). In this case, the UE monitors the PDCCH on a PDCCH monitoring occasion in the PCell (as shown by using a box in FIG. 3) based on the SS set in the PCell and the SS set in the SCell.

A CORESET, a periodicity, an offset, an intra-slot PDCCH monitoring symbol, and duration that are of the PDCCH are all determined based on the SS set in the PCell. An aggregation level of the PDCCH and a quantity of PDCCH candidates corresponding to the aggregation level are determined based on the SS set in the SCell, that is, determined based on nrofCandidates that is configured for the SS set in the scheduled cell.

Therefore, when the UE detects the DCI in the PCell, and the DCI schedules a PDSCH of the SCell, the UE may receive, in the SCell, data carried on the PDSCH.

In the multi-carrier scenario, one PCell and at least one SCell may be configured for one UE. The network device may deactivate a part of the SCell or enable a part of the SCell to enter a sleep state, so as to disable some internal components, thereby saving network power consumption.

However, a same CC may be a PCell or an SCell for different UEs. In this case, the network device cannot actually disable the CC, and consequently, network power consumption cannot be saved.

As shown in Table 1, a CC 2 is an SCell for a UE 1, and the CC 2 is a PCell for a UE 2. The terminal device does not support deactivating the PCell or enabling the PCell to enter a sleep state. Therefore, the network device may notify the UE 1 to deactivate the CC 2 or enable the CC 2 to enter a sleep state, but the UE 2 cannot deactivate the CC 2 or enable the CC 2 to enter the sleep state. It can be learned that the network device cannot actually disable the CC 2, and can only disable a CC 3, compromising network energy saving.

**Table 1**

| | CC 1 | CC 2 | CC 3 |
|---|---|---|---|
| UE 1 | PCell | SCell | |
| UE 2 | | PCell | SCell |

Based on this, a PCell switching solution is introduced.

In the PCell switching solution, the network device may switch PCells of a part of UEs to another cell, and change original PCells into SCells. Further, the network device may notify each UE to deactivate an SCell or enable an SCell to enter a sleep state.

As shown in Table 1 and Table 2, the network device may notify the UE 1 to switch the CC 2 to a PCell. In this way, the network device can disable the CC 1 and the CC 3, enhancing network energy saving.

**Table 2**

| | CC 1 | CC 2 | CC 3 |
|---|---|---|---|
| UE 1 | SCell | PCell | |
| UE 2 | | PCell | SCell |

In an existing protocol, PCell switching may be implemented by using RRC signaling, for example, by using layer 3 (layer 3, L3) switching signaling. However, the RRC signaling cannot adapt to a current cell load status in real time, and is inflexible. Therefore, the network device may indicate PCell switching by using layer 1 (layer 1, L1) signaling. For example, the L1 signaling may be DCI or medium access control-control element (medium access control-control element, MAC CE) signaling.

Generally, a PCell may be used as the scheduling cell for cross-carrier scheduling. When the scheduling cell undergoes dynamic switching, flexibility of cross-carrier scheduling is limited. In some other scenarios, an SCell may also be used as the scheduling cell for cross-carrier scheduling. For example, one SCell is used as the scheduling cell, and another SCell is used as the scheduled cell; or an SCell is used as the scheduling cell, and a PCell is used as the scheduled cell. As described above, in the existing protocol, a relationship between the scheduling cell and the scheduled cell is configured by using the RRC signaling, and the RRC signaling is inflexible. To flexibly use a PDCCH resource, the L1 signaling may be used to indicate scheduling cell switching. The scheduling cell may be a PCell or an SCell. Regardless of a PCell dynamic switching solution or a scheduling cell dynamic switching solution, how to perform cross-carrier scheduling is an urgent problem to be resolved.

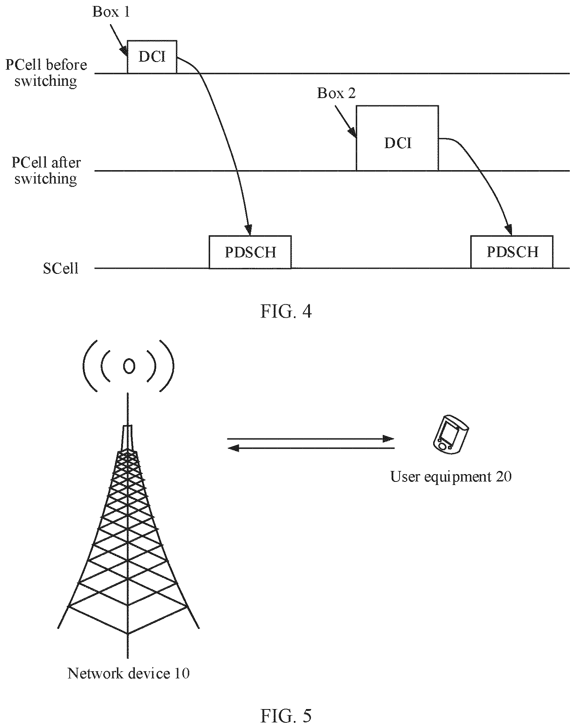

The PCell switching solution is used as an example. On one hand, CORESETs associated with SS sets in different cells are independently configured, and therefore, sizes of CORESETs in different scheduling cells may be different. As shown in FIG. 4, a CORESET (as shown by using a box 1 in FIG. 4) in a PCell before switching is different from a CORESET (as shown by using a box 2 in FIG. 4) in a PCell after switching. It can be learned that, if same nrofCandidates of the scheduled cell is used for different scheduling cells, scheduling flexibility is limited. For example, a size of the CORESET in the PCell before switching is small, and a small quantity of aggregation levels of the PDCCH and a quantity of PDCCH candidates corresponding to each aggregation level are supported. A size of the CORESET in the PCell after switching is large, and a large quantity of aggregation levels of the PDCCH and a quantity of PDCCH candidates corresponding to each aggregation level may be supported. However, one SS set in the scheduled cell has only one piece of nrofCandidates, which cannot adapt to the sizes of the CORESETs in different scheduling cells, limiting scheduling flexibility.

On the other hand, a maximum quantity of PDCCH candidates of the scheduled cell is determined based on a subcarrier spacing (subcarrier spacing, SCS) of an active downlink BWP of the scheduling cell, and a quantity of PDCCH candidates that is configured for the scheduled cell should not exceed the maximum quantity of PDCCH candidates. When the network device and the terminal device support PCell dynamic switching, the quantity of PDCCH candidates that is configured for the scheduled cell needs to be less than or equal to min{a maximum quantity of PDCCH candidates determined based on an SCS of an active downlink BWP of the PCell before switching, a maximum quantity of PDCCH candidates determined based on an SCS of an active downlink BWP of the PCell after switching}, and consequently, scheduling flexibility is also limited. Still with reference to FIG. 4, the maximum quantity of PDCCH candidates determined based on an SCS of an active downlink BWP of the PCell before switching is 44, and the maximum quantity of PDCCH candidates determined based on an SCS of an active downlink BWP of the PCell after switching is 36. Therefore, the quantity of PDCCH candidates that is configured for the scheduled cell needs to be less than or equal to 36.

In conclusion, to resolve the foregoing problems, this application provides a cross-carrier scheduling method and a communication apparatus. For different cells (for example, different PCells or different scheduling cells), SS sets or different quantities of PDCCH candidates are configured for scheduled cells. In this way, during PCell dynamic switching or scheduling cell dynamic switching, cross-carrier scheduling can be performed, and limitation on scheduling flexibility of cross-carrier scheduling can be avoided.

The cross-carrier scheduling method in this application may be applied to a communication system. The communication system may include but is limited to a wireless communication system, for example, a narrowband Internet of things (narrowband Internet of things, NB-IoT) system, an LTE system, a 5th generation (5th generation, 5G) communication system, or a communication system evolved after 5G, for example, a 6th generation (6th generation, 6G) communication system.

Scenarios to which the communication system is applicable may include but is not limited to: terrestrial cellular communication, non-terrestrial communication (non-terrestrial network, NTN), satellite communication, high altitude communication platform (high altitude platform station, HAPS) communication, vehicle-to-everything (vehicle-to-everything, V2X) communication, integrated access and backhaul (integrated access and backhaul, IAB) communication, reconfigurable intelligent surface (reconfigurable intelligent surface, RIS) communication, and the like.

FIG. 5 is a diagram of an architecture of a communication system according to an embodiment of this application. As shown in FIG. 5, the communication system in this application may include a network device 10 and a user equipment (user equipment, UE) 20.

There may be one or more network devices 10. The network device 10 is a device in a wireless network. The network device 10 may be a base station, an access point, or an access network device, or may be a device that is in an access network and that communicates with a wireless terminal through one or more sectors over an air interface (air interface). The network device 10 may be configured to mutually convert a received over-the-air frame and an internet protocol (Internet protocol, IP) packet, and serve as a router between the wireless terminal and a remaining portion of the access network, where the remaining portion of the access network may include an IP network. The network device 10 may further coordinate attribute management of the air interface. For example, the network device 10 may be a satellite, an uncrewed aerial vehicle, or an evolved NodeB (evolved NodeB, eNB or eNodeB) in LTE. Alternatively, the network device 10 may be a radio controller in a cloud radio access network (cloud radio access network, CRAN) scenario; a wearable device or a vehicle-mounted device; a terminal, a relay station, or an access point that functions as a base station in vehicle-to-everything (vehicular-to-everything, V2X), device-to-device (Device-to-Device, D2D) communication, and machine-to-machine (Machine-to-Machine, M2M) communication; a base station, for example, a gNB, in a 5G network; a base station in a future 6G network; or a network device in a future evolved public land mobile network (public land mobile network, PLMN). This is not limited herein.

The network device 10 may be a RAN node that connects the user equipment 20 to the wireless network. Currently, examples of some RAN nodes are: a gNB, a transmission reception point (transmission reception point, TRP), an evolved NodeB (evolved NodeB, eNB), a home base station (for example, a home evolved NodeB, or a home NodeB, HNB), a baseband unit (baseband unit, BBU), a wireless fidelity (wireless fidelity, Wi-Fi) access point (access point, AP), an IAB, and the like.

There may be one or more user equipments 20. The user equipment 20 is a device that has a wireless transceiver function. The user equipment 20 may be a wireless terminal or a wired terminal. The wireless terminal may be a device that provides a user with voice and/or other service data connectivity, a handheld device with a wireless connection function, or another processing device connected to a wireless modem. The wireless terminal may communicate with one or more core networks through a radio access network (radio access network, RAN). The wireless terminal may be a mobile terminal, for example, a mobile phone (or referred to as a "cellular" phone) or a computer with a mobile terminal, for example, may be a portable, pocket-sized, handheld, computer built-in, or vehicle-mounted mobile apparatus, which exchanges voice and/or data with the radio access network. For example, the wireless terminal is a device like a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), an uncrewed aerial vehicle, a wearable device, or a terminal in the internet of vehicles. The wireless terminal may also be referred to as a system, a subscriber unit (subscriber unit), a subscriber station (subscriber station), a mobile station (mobile station, MS), a mobile console, a remote station (remote station), a remote terminal (remote terminal), an access terminal (access terminal), a user terminal (user terminal), a user agent (user agent), a user device (user device or user equipment), a user equipment (user equipment, UE), a terminal unit, a terminal station, a remote station, a mobile device, a terminal, a wireless communication device, a terminal agent, a terminal apparatus, or the like. This is not limited herein.

This application may be applied to downlink signal transmission, may be applied to uplink signal transmission, or may be applied to device-to-device (device-to-device, D2D) signal transmission. For the downlink signal transmission, a sending device is the network device 10, and a corresponding receiving device is the user equipment 20. For the uplink signal transmission, a sending device is the user equipment 20, and a corresponding receiving device is the network device 10. For the D2D signal transmission, a sending device is the user equipment 20, and a corresponding receiving device is also the user equipment 20. The sending device may serve as a relay to forward a signal from the network device 10 to the receiving device. A signal transmission direction is not limited in this application.

In some embodiments, the communication system is applicable to a standalone (standalone, SA) scenario, a dual connectivity (dual connectivity, DC) scenario, and the like.

In the SA scenario, the user equipment 20 is connected to a single network device 10. The network device 10 connected to the user equipment 20 and a core network connected to the network device 10 are of a same standard. For example, the core network is a 5G core, the corresponding network device 10 is a 5G base station, and the 5G base station is directly connected to the 5G core. For another example, the core network is a 6G core, the corresponding network device 10 is a 6G base station, and the 6G base station is directly connected to the 6G core.

In the DC scenario, the user equipment 20 is connected to network devices 10 of different standards/a same standard, and is usable for the network device 10 in a connected state. For example, a core network is a 5G core, the corresponding network devices 10 are a 5G base station and a 6G base station, and the user equipment 20 is connected to both the 5G base station and the 6G base station, where the 5G base station is used as a master station, and the 6G base station is used as a secondary station. For another example, a core network is a 6G core, the corresponding network devices 10 are a 5G base station and a 6G base station, and the user equipment 20 is connected to both the 6G base station and the 5G base station, where the 6G base station is used as a master station, and the 5G base station is used as a secondary station. For another example, a core network is a 6G Core, the corresponding network devices 10 are two 6G base stations, and the user equipment 20 is connected to both the two 6G base stations, in other words, both a master station and a secondary station are the 6G base stations.

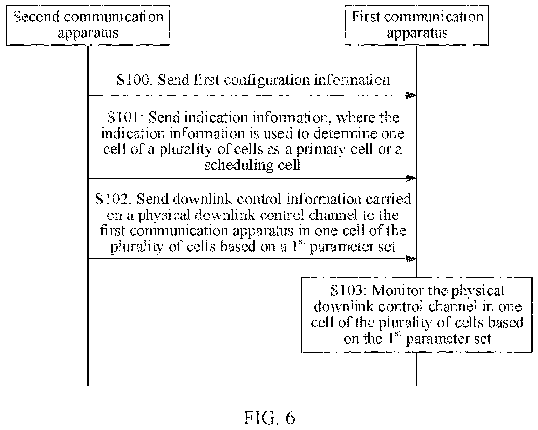

FIG. 6 is an interaction flowchart of a cross-carrier scheduling method according to an embodiment of this application. The method is applied to a first communication apparatus and a second communication apparatus. The first communication apparatus may be a user equipment or an apparatus in the user equipment, and the second communication apparatus may be a network device or an apparatus in the network device. For brevity of description, an example in which the method is performed by the first communication apparatus and the second communication apparatus is used. As shown in FIG. 6, the cross-carrier scheduling method provided in this application may include the following steps.

S100: The second communication apparatus sends first configuration information to the first communication apparatus.

Correspondingly, the first communication apparatus receives the first configuration information sent by the second communication apparatus.

The first configuration information may be carried in RRC signaling, that is, the first configuration information is semi-statically configured. Therefore, S100 does not need to be performed each time before S101 to S103 are performed. Before performing cross-carrier scheduling by using DCI, the second communication apparatus may send the first configuration information to the first communication apparatus. Correspondingly, before monitoring a PDCCH, the first communication apparatus may receive the first configuration information sent by the second communication apparatus, and may store the first configuration information until new first configuration information is received next time. Certainly, the second communication apparatus may alternatively perform S100 each time before S101 to S103 are performed. Therefore, S100 is optional.

The first configuration information includes a plurality of parameter sets of a scheduled cell, parameters in the plurality of parameter sets of the scheduled cell are parameters that are in an SS set and that are used to monitor the PDCCH, and the plurality of parameter sets of the scheduled cell have an association relationship with a plurality of cells. Each parameter set of the scheduled cell may include one or more parameters.

A manner for sending the first configuration information is not limited in this application.

In some examples, the first configuration information may be carried in the RRC signaling. Certainly, the first configuration information may alternatively be carried in other signaling. This is not limited in this application.

In some examples, the second communication apparatus may send the first configuration information to the first communication apparatus in a current PCell. Certainly, the second communication apparatus may alternatively send the first configuration information in another cell. This is not limited in this application.

In a PCell switching solution, a concept of a candidate PCell may be introduced in this application. The candidate PCell is a cell that may be determined as a PCell in the primary cell switching solution. The candidate PCell may be a subset or all of SCells, and the candidate PCell may also include a PCell. There may be one or more candidate PCells, but at a same moment, only one cell of the one or more candidate PCells is used as a current primary cell, and other cells are secondary cells. When there is one candidate PCell, the candidate PCell does not include the current PCell. When there are a plurality of candidate PCells, the candidate PCells may include the current PCell, or may not include the current PCell. For ease of description, in this application, descriptions are provided by using an example in which the candidate PCell includes the current primary cell.

In some examples, a part of cells configured by the second communication apparatus for the first communication apparatus may be candidate PCells.

For example, the second communication apparatus configures three cells (a cell 1, a cell 2, and a cell 3) for the first communication apparatus. If the cell 1 and the cell 2 are candidate PCells, primary cell switching may be performed between the cell 1 and the cell 2. When the current primary cell is the cell 1, the cell 2 is a secondary cell. When the current primary cell is the cell 2, the cell 1 is a secondary cell. Regardless of whether the current primary cell is the cell 1 or the cell 2, the cell 3 is used as a secondary cell.

It may be further considered that, in some examples, all cells configured by the second communication apparatus for the first communication apparatus or all SCells are candidate PCells. The foregoing three cells are used as an example. All the cell 1, the cell 2, and the cell 3 may be used as candidate PCells. In this case, primary cell switching may be performed between the cell 1, the cell 2, and the cell 3.

Based on the foregoing descriptions, the second communication apparatus configures a plurality of cells for the first communication apparatus. One cell of the configured plurality of cells is the current PCell, and a part or all of the configured plurality of cells may be the candidate PCells. The "cell" in this application is short for a serving cell.

In a scheduling cell switching solution, a concept of a candidate scheduling cell may be introduced in this application. The candidate scheduling cell is a cell for which a scheduled cell may be determined as a scheduling cell in the scheduling cell switching solution. The candidate scheduling cell is a subset or all of PCells and SCells. There may be one or more candidate scheduling cells, but at a same moment, only one cell of the one or more candidate scheduling cells is used as a current scheduling cell. When there is one candidate scheduling cell, the candidate scheduling cell does not include the current scheduling cell. When there are a plurality of candidate scheduling cells, the candidate scheduling cells may include the current scheduling cell, or may not include the current scheduling cell. For ease of description, in this application, descriptions are provided by using an example in which the candidate scheduling cell includes the current scheduling cell.

In some examples, a part of cells configured by the second communication apparatus for the first communication apparatus may be candidate scheduling cells.

For example, the second communication apparatus configures three cells (a cell 1, a cell 2, and a cell 3) for the first communication apparatus. The cell 1 and the cell 2 are candidate scheduling cells, scheduling cell switching may be performed between the cell 1 and the cell 2, the cell 3 is a scheduled cell, and the cell 3 may be scheduled by the cell 1 or the cell 2. When the current scheduling cell is the cell 1, the cell 3 is scheduled by the cell 1. When the current scheduling cell is the cell 2, the cell 3 is scheduled by the cell 2.

It may be further considered that, in some examples, all cells configured by the second communication apparatus for the first communication apparatus or all SCells are candidate scheduling cells. The foregoing three cells are used as an example. All the cell 1, the cell 2, and the cell 3 may be used as candidate scheduling cells. In this case, scheduling cell switching may be performed between the cell 1, the cell 2, and the cell 3.

Based on the foregoing descriptions, the second communication apparatus configures a plurality of cells for the first communication apparatus. For one scheduled cell, one cell of the configured plurality of cells is the current scheduling cell, and a part or all of the configured plurality of cells may be the candidate scheduling cells. The "cell" in this application is short for a serving cell.

In conclusion, the first communication apparatus may obtain the first configuration information, so that each parameter set corresponding to each cell of the plurality of cells can be determined based on the first configuration information. In this application, in the PCell switching solution, the plurality of cells are candidate PCells; and in the scheduling cell switching solution, the plurality of cells are candidate scheduling cells.

S101: The second communication apparatus sends indication information to the first communication apparatus, where the indication information is used to determine one cell of the plurality of cells as a primary cell or a scheduling cell.

Correspondingly, the first communication apparatus receives the indication information sent by the second communication apparatus, where the indication information is used to determine one cell of the plurality of cells as a primary cell or a scheduling cell.

The plurality of cells are candidate PCells or candidate scheduling cells. In the PCell switching solution, the indication information is used to determine one cell of the plurality of cells as a primary cell. In the scheduling cell switching solution, the indication information is used to determine one cell of the plurality of cells as a scheduling cell.

The second communication apparatus may send the indication information to the first communication apparatus when expecting the first communication apparatus to perform PCell switching or scheduling cell switching between the plurality of cells.

The PCell switching mentioned in this application may alternatively be Spcell switching. In other words, the PCell switching solution is applicable to PCell switching in an MCG, and is also applicable to PSCell switching in an SCG. For ease of description, the PCell switching in this application may be the PCell switching in the MCG, may be the PSCell switching in the SCG, or may be PCell switching in a non-dual-connectivity scenario.

In the PCell switching solution, the indication information may be used to determine one cell of the plurality of cells as a PCell. If the primary cell determined based on the indication information is the current PCell, the first communication apparatus does not need to perform PCell switching. If the primary cell determined based on the indication information is not the current PCell, the first communication apparatus performs PCell switching. In addition, a meaning of the indication information may also be expressed as that the indication information indicates to switch the PCell from one cell of the plurality of cells to another cell. This is not limited in this application, provided that a function of the indication information is used for PCell switching.

For example, the plurality of cells include a CC 1, a CC 2, and a CC 3, where the current PCell is the CC 1. In this case, the indication information may be used to determine the CC 2 as a PCell, or the indication information may be used to determine the CC 1 as a PCell. When the indication information is used to determine the CC 2 as a PCell, the first communication apparatus switches the PCell from the CC 1 to the CC 2 after receiving the indication information. When the indication information is used to determine the CC 1 as a PCell, the first communication apparatus does not switch the PCell after receiving the indication information, and the CC 1 is still a PCell.

In the scheduling cell switching solution, the indication information may be used to determine one cell of the plurality of cells as a scheduling cell. If the scheduling cell determined based on the indication information is the current scheduling cell, the first communication apparatus does not need to perform scheduling cell switching. If the scheduling cell determined based on the indication information is not the current scheduling cell, the first communication apparatus performs scheduling cell switching. In addition, a meaning of the indication information may also be expressed as that the indication information indicates to switch the scheduling cell from one cell of the plurality of cells to another cell. This is not limited in this application, provided that a function of the indication information is used for scheduling cell switching.

For example, the plurality of cells include: a CC 1, a CC 2, and a CC 3, where the CC 3 is a scheduled cell, and the current scheduling cell is the CC 1. The indication information may be used to determine the CC 2 as a scheduling cell, or the indication information may be used to determine the CC 1 as a scheduling cell. When the indication information is used to determine the CC 2 as a scheduling cell, the first communication apparatus switches the scheduling cell from the CC 1 to the CC 2 after receiving the indication information. When the indication information is used to determine the CC 1 as a scheduling cell, the first communication apparatus does not switch the scheduling cell after receiving the indication information, and the CC 1 is still a scheduling cell.

After sending the indication information or determining that PCell switching or scheduling cell switching needs to be performed, the second communication apparatus may use a cell determined based on the indication information as a PCell or a scheduling cell. After receiving the indication information, the first communication apparatus may determine a PCell or a scheduling cell based on the indication information.

In addition, in the PCell switching solution, if a cell that is determined as a PCell based on the indication information is different from the current PCell, the second communication apparatus and the first communication apparatus perform PCell switching, that is, the second communication apparatus and the first communication apparatus use the cell determined based on the indication information as a PCell. In some examples, optionally, after the second communication apparatus and the first communication apparatus perform PCell switching, the second communication apparatus and the first communication apparatus further use the PCell before switching as a candidate PCell. In other words, the PCell before switching becomes an SCell after switching.

Similarly, in the scheduling cell switching solution, if a cell that is determined as a scheduling cell based on the indication information is different from the current scheduling cell, the second communication apparatus and the first communication apparatus perform scheduling cell switching, that is, the second communication apparatus and the first communication apparatus use the cell determined based on the indication information as a scheduling cell. In some examples, optionally, after the second communication apparatus and the first communication apparatus perform scheduling cell switching, the second communication apparatus and the first communication apparatus further use the scheduling cell before switching as a candidate scheduling cell.

A specific implementation of the indication information is not limited in this application.

In some examples, the indication information may be carried in the DCI or MAC CE signaling. Certainly, the indication information may alternatively be carried in other signaling. This is not limited in this application.

In some examples, the second communication apparatus may send the indication information to the first communication apparatus in a PCell or a scheduling cell. Certainly, the second communication apparatus may alternatively send the indication information in another cell. This is not limited in this application. In addition, the indication information and the first configuration information may be sent in a same cell, or may be sent in different cells. This is not limited in this application.

It should be understood that S100 and S101 are not subject to a time sequence, and S100 and S101 may be simultaneously performed, or may be sequentially performed.

S102: The second communication apparatus sends downlink control information carried on the physical downlink control channel to the first communication apparatus in one cell of the plurality of cells based on a 1^{st} parameter set. One cell of the plurality of cells is a primary cell determined based on the indication information or a scheduling cell determined based on the indication information. The downlink control information (downlink control information, DCI) may carry scheduling information for cross-carrier scheduling.

S102 is optional. Only when the second communication apparatus needs to perform cross-carrier scheduling on the first communication apparatus, the second communication apparatus needs to send the downlink control information to the first communication apparatus in one cell of the plurality of cells based on the 1^{st} parameter set.

S103: The first communication apparatus monitors the physical downlink control channel in one cell of the plurality of cells based on the 1^{st} parameter set. One cell of the plurality of cells is a primary cell determined based on the indication information or a scheduling cell determined based on the indication information.

The second communication apparatus may determine, from the plurality of parameter sets of the scheduled cell based on the first configuration information, a parameter set that has an association relationship with one cell of the plurality of cells as the 1^{st} parameter set. Correspondingly, the first communication apparatus may determine, from the plurality of parameter sets of the scheduled cell based on the indication information and the first configuration information, a parameter set that has an association relationship with the cell as the 1^{st} parameter set. The cell is a primary cell determined based on the indication information or a scheduling cell determined based on the indication information.

The second communication apparatus sends the DCI carried on the PDCCH to the first communication apparatus in the cell based on the 1^{st} parameter set, to perform cross-carrier scheduling. Correspondingly, the first communication apparatus monitors the PDCCH in the cell based on the 1^{st} parameter set.

In conclusion, during PCell dynamic switching or scheduling cell dynamic switching, the second communication apparatus and the first communication apparatus each may correspondingly switch a parameter set of the scheduled cell.

In this way, on one hand, different nrofCandidates of the scheduled cell may be respectively used for different PCells, so that different nrofCandidates may adapt to sizes of CORESETs in different PCells. In this way, limitation on scheduling flexibility of cross-carrier scheduling is avoided. On the other hand, for different PCells, the second communication apparatus and the first communication apparatus may separately use different nrofCandidates of the scheduled cell, so that a quantity of PDCCH candidates of the scheduled cell is not limited by PCells before and after switching.

Similarly, on one hand, different nrofCandidates of the scheduled cell may be respectively used for different scheduling cells, and different nrofCandidates may adapt to sizes of CORESETs in different scheduling cells. In this way, limitation on scheduling flexibility of cross-carrier scheduling is avoided. On the other hand, different nrofCandidates of the scheduled cell may be respectively used for different scheduling cells, so that a quantity of PDCCH candidates of the scheduled cell is not limited by scheduling cells before and after switching.

It should be understood that S100 may be performed before the second communication apparatus performs S102, and correspondingly, S100 may be performed before the first communication apparatus performs S103. S102 and S103 are not subject to a time sequence, and S102 and S103 may be simultaneously performed, or may be sequentially performed.

According to the cross-carrier scheduling method provided in this application, the second communication apparatus sends the indication information to the first communication apparatus, so that it can be learned, based on the indication information, that one cell of the plurality of cells needs to be used as a PCell or a scheduling cell.

Because the plurality of parameter sets of the scheduled cell are configured by using the first configuration information, the parameters in the plurality of parameter sets of the scheduled cell are the parameters in the search space set, and the plurality of parameter sets of the scheduled cell have an association relationship with the plurality of cells. Therefore, for each cell of the plurality of cells, a parameter set may be configured for the scheduled cell.

In this way, the second communication apparatus and the first communication apparatus can determine, from the plurality of parameter sets of the scheduled cell based on the first configuration information, a parameter set that has an association relationship with one cell of the plurality of cells as the 1^{st} parameter set. One cell of the plurality of cells is a PCell determined based on the indication information or a scheduling cell determined based on the indication information.

It can be learned that, during PCell dynamic switching, the second communication apparatus and the first communication apparatus each may correspondingly switch a parameter set of the scheduled cell. In this way, for different PCells, the second communication apparatus and the first communication apparatus each may use respective nrofCandidates corresponding to a different parameter set of the scheduled cell, so that different nrofCandidates may adapt to a size of a CORESET in a different PCell, and may not be subject to impact of a maximum quantity of PDCCH candidates determined based on SCSs of active downlink BWPs of PCells before and after switching.

Similarly, during scheduling cell dynamic switching, the second communication apparatus and the first communication apparatus each may correspondingly switch a parameter set of the scheduled cell. In this way, for different scheduling cells, the second communication apparatus and the first communication apparatus each may use respective nrofCandidates corresponding to a different parameter set of the scheduled cell, so that different nrofCandidates may adapt to a size of a CORESET in a different scheduling cell, and may not be subject to impact of a maximum quantity of PDCCH candidates determined based on an SCS of an active downlink BWP of scheduling cells before and after switching.

The second communication apparatus may send the DCI carried on the physical downlink control channel to the first communication apparatus in one cell of the plurality of cells based on the 1^{st} parameter set, to perform cross-carrier scheduling. Correspondingly, the first communication apparatus may monitor the physical downlink control channel in one cell of the plurality of cells based on the 1^{st} parameter set. One cell of the plurality of cells is a current PCell or a current scheduling cell.

In conclusion, during PCell dynamic switching or scheduling cell dynamic switching, cross-carrier scheduling is implemented, and limitation on scheduling flexibility of cross-carrier scheduling is avoided.

Based on the descriptions of the foregoing embodiments, the plurality of parameter sets of the scheduled cell in the first configuration information may be configured in a plurality of manners.

In some examples, the plurality of parameter sets of the scheduled cell are a plurality of SS set groups of the scheduled cell, one of the SS set groups includes one or more SS sets, and each SS set includes at least a first parameter and a second parameter, where the first parameter indicates an identity of the SS set, and the second parameter indicates an aggregation level of the PDCCH and a quantity of PDCCH candidates corresponding to the aggregation level. That is, the plurality of SS set groups of the scheduled cell have an association relationship with the plurality of cells. In the PCell switching solution, the plurality of cells are candidate PCells; and in the scheduling cell switching solution, the plurality of cells are candidate scheduling cells.

The first parameter is a parameter searchSpaceId in the SS set. The second parameter is a parameter nrofCandidates in the SS set. The aggregation level of the PDCCH in the second parameter may be of one or more types, and the quantity of PDCCH candidates corresponding to the aggregation level is a quantity of PDCCH candidates corresponding to each type of aggregation level of the PDCCH.

In the PCell dynamic switching solution, the 1^{st} parameter set is an SS set group, that is, the SS set group has an association relationship with the current PCell. In SS sets included in the SS set group, an identity that is of an SS set and that is indicated by a first parameter is the same as an identity of an SS set in a current PCell, that is, an identity of at least one SS set in the SS set group is the same as an identity of at least one SS set in the current PCell. In this case, the second communication apparatus may send the DCI on the SS set with the same identity in the PCell, to perform cross-carrier scheduling. The current PCell is a cell used as a PCell at a current moment, that is, a cell that is determined as a PCell based on the indication information. There may be one or more SS sets in the current PCell, and configuration information of each SS set includes at least one of the following parameters: an identity of the SS set, a CORESET of the PDCCH, a periodicity of the PDCCH, an offset of the PDCCH, an intra-slot PDCCH monitoring symbol of the PDCCH, and duration of the PDCCH.

The second communication apparatus sends the DCI in the current PCell based on a second parameter in an SS set in the scheduled cell and an SS set in the current PCell, to perform cross-carrier scheduling. The first communication apparatus monitors the PDCCH in the current PCell based on the second parameter in the SS set in the scheduled cell and the SS set in the current PCell. The SS set in the scheduled cell is an SS set in the SS set group, and an identity of the SS set in the scheduled cell is the same as an identity of the SS set in the current PCell.

Specifically, the first communication apparatus determines a PDCCH monitoring occasion based on a periodicity, an offset, an intra-slot PDCCH monitoring symbol, and duration of the SS set in the current PCell, and determines a quantity of PDCCH candidates based on the second parameter in the SS set in the scheduled cell. Therefore, the first communication apparatus monitors the PDCCH on a CORESET in the SS set in the current PCell, and the aggregation level and the quantity of PDCCH candidates corresponding to the aggregation level are determined based on the second parameter in the SS set in the scheduled cell. For a specific implementation in which the first communication apparatus monitors the PDCCH, refer to the foregoing descriptions of the PDCCH monitoring mechanism.

Similarly, in the scheduling cell dynamic switching solution, the 1^{st} parameter set is an SS set group, that is, the SS set group has an association relationship with the current PCell. In SS sets included in the SS set group, an identity that is of an SS set and that is indicated by a first parameter is the same as an identity of an SS set in a current scheduling cell, that is, an identity of at least one SS set in the SS set group is the same as an identity of at least one SS set in the current scheduling cell. In this case, the second communication apparatus may send the DCI on the SS set with the same identity in the scheduling cell, to perform cross-carrier scheduling. The current scheduling cell is a cell used as a scheduling cell at a current moment, that is, a cell that is determined as a scheduling cell based on the indication information. There may be one or more SS sets in the current scheduling cell, and configuration information of each SS set includes at least one of the following parameters: an identity of the SS set, a CORESET of the PDCCH, a periodicity of the PDCCH, an offset of the PDCCH, an intra-slot PDCCH monitoring symbol of the PDCCH, and duration of the PDCCH.

The second communication apparatus sends the DCI in the current scheduling cell based on a second parameter in an SS set in the scheduled cell and an SS set in a current scheduling cell, to perform cross-carrier scheduling. The first communication apparatus may monitor the PDCCH in the current scheduling cell based on the second parameter in the SS set in the scheduled cell and the SS set in the current scheduling cell. The SS set in the scheduled cell is an SS set in the SS set group, and an identity of the SS set in the scheduled cell is the same as an identity of the SS set in the current scheduling cell.

Specifically, the first communication apparatus determines a PDCCH monitoring occasion based on a periodicity, an offset, an intra-slot PDCCH monitoring symbol, and duration of the SS set in the current scheduling cell, and determines a quantity of PDCCH candidates based on the second parameter in the SS set in the scheduled cell. Therefore, the first communication apparatus monitors the PDCCH on a CORESET in the SS set in the current scheduling cell, and the aggregation level and the quantity of PDCCH candidates corresponding to the aggregation level are determined based on the second parameter in the SS set in the scheduled cell. For a specific implementation in which the first communication apparatus monitors the PDCCH, refer to the foregoing descriptions of the PDCCH monitoring mechanism.

Identities of SS sets or quantities of SS sets in the plurality of SS set groups may be the same or different. In addition, one SS set group may also be referred to as one group of SS sets, and one group of SS sets includes one or more SS sets.

For example, the identities of the SS sets in the plurality of SS set groups are the same. In other words, identities of SS sets in different SS set groups are the same. Quantities of SS sets in different SS set groups may be the same or different.

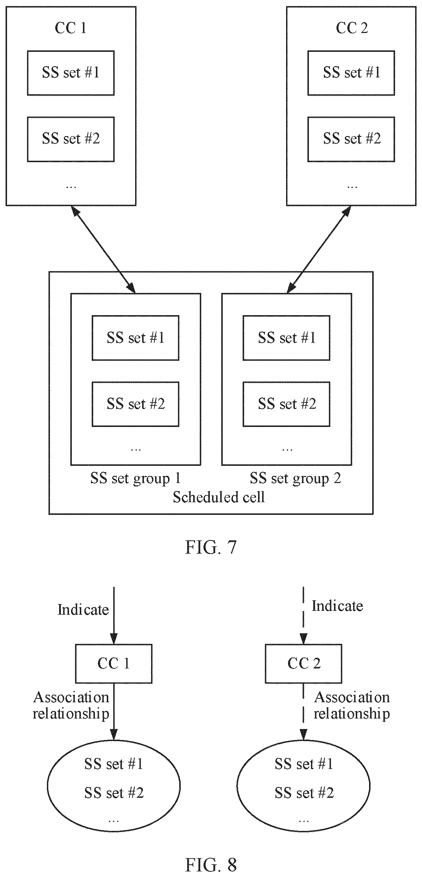

It is assumed that, a value of an ID of an SS set in each cell may range from 0 to 39. In FIG. 7, two candidate PCells or two candidate scheduling cells (denoted as a CC 1 and a CC 2) are used as an example. PCell switching may be performed between the CC 1 and the CC 2 or scheduling cell switching may be performed between the CC 1 and the CC 2. SS sets in the CC 1 and the CC 2 are independently configured. SS sets whose identities are 1 and 2 may be separately configured for the CC 1, and SS sets whose identities are 1 and 2 may be separately configured for the CC 2. It should be understood that, quantities of SS sets in the CC 1 and the CC 2 may be the same in FIG. 7. Alternatively, quantities of SS sets in the CC 1 and the CC 2 may be different.

Because PCell switching or scheduling cell switching may be performed between the two cells, the scheduled cell correspondingly has two SS set groups: an SS set #1 and an SS set #2 on the left (denoted as an SS set group 1), and an SS set #1 and an SS set #2 on the right (denoted as an SS set group 2). In this case, there is an association relationship between the SS set group 1 of the scheduled cell and the CC 1, and there is an association relationship between the SS set group 2 of the scheduled cell and the CC 2. #1 and #2 may be considered as identities of the SS sets.

Although identities of the SS sets in the SS set group 1 and the SS set group 2 are the same, the SS sets in the SS set group 1 and the SS set group 2 are independently configured. Therefore, other parameters included in the SS sets in the SS set group 1 and the SS set group 2 may be different or the same. It can be learned that identities of SS sets in different SS set groups of the scheduled cell are the same, but second parameters in the SS sets may be different, so that limitation on scheduling flexibility of cross-carrier scheduling is avoided.

When the identities of the SS sets in the plurality of SS set groups are the same, a quantity of the SS set groups is less than or equal to a quantity of the candidate PCells or a quantity of the candidate scheduling cells.

The quantity of the SS set groups is equal to the quantity of the candidate PCells. In this case, each SS set group has an association relationship with one cell of the candidate PCells, that is, each SS set group corresponds to one cell of the candidate PCells.

The quantity of the SS set groups may alternatively be less than the quantity of the candidate PCells. In this case, a part of the SS set groups has an association relationship with one cell of the candidate PCells, and the remaining SS set groups have an association relationship with a plurality of cells in the candidate PCells; or each SS set group has an association relationship with a plurality of cells in the candidate PCells.

Similarly, the quantity of the SS set groups is equal to the quantity of the candidate scheduling cells. In this case, each SS set group has an association relationship with one cell of the candidate scheduling cells, that is, each SS set group corresponds to one cell of the candidate scheduling cells.

The quantity of the SS set groups may alternatively be less than the quantity of the candidate scheduling cells. In this case, a part of the SS set groups has an association relationship with one cell of the candidate scheduling cells, and the remaining SS set groups have an association relationship with a plurality of cells in the candidate scheduling cells; or each SS set group has an association relationship with a plurality of cells in the candidate scheduling cells.

It is assumed that the quantity of the candidate PCells or the quantity of the candidate scheduling cells is M, and the quantity of the SS set groups of the scheduled cell is N1, where both M and N1 are positive integers greater than or equal to 2.

N1=M indicates that the plurality of SS set groups have a one-to-one association relationship with the candidate PCells or the candidate scheduling cells.

For example, N1=M=2. As shown in FIG. 7 and FIG. 8, the second communication apparatus may configure two SS set groups for the scheduled cell, and each SS set group includes: an SS set #1 and an SS set #2. The candidate PCells or the candidate scheduling cells include: a CC 1 and a CC 2.

In FIG. 7, when the CC 1 is a PCell or a scheduling cell, the SS set group 1 is used by the second communication apparatus to perform cross-carrier scheduling in the CC 1, and is used by the first communication apparatus to monitor the PDCCH in the CC 1. When the CC 2 is a PCell or a scheduling cell, the SS set group 2 is used by the second communication apparatus to perform cross-carrier scheduling in the CC 2, and is used by the first communication apparatus to monitor the PDCCH in the CC 2.

In FIG. 8, in the PCell dynamic switching solution or the scheduling cell dynamic switching solution, the second communication apparatus and the first communication apparatus each correspondingly switch an SS set group of the scheduled cell based on the foregoing association relationship.

After the indication information is used to determine the CC 1 as a PCell or a scheduling cell, the second communication apparatus and the first communication apparatus use the CC 1 as a PCell or a scheduling cell. Correspondingly, an SS set in the scheduled cell is switched to an SS set in the SS set group 1. In this way, the second communication apparatus may send the DCI through the PDCCH based on a parameter in the SS set in the SS set group 1, and the first communication apparatus may monitor the PDCCH based on the parameter in the SS set in the SS set group 1.

After the indication information is used to determine the CC 2 as a PCell or a scheduling cell, the second communication apparatus and the first communication apparatus use the CC 2 as a PCell or a scheduling cell. Correspondingly, an SS set in the scheduled cell is switched to an SS set in the SS set group 2. In this way, the second communication apparatus may send the DCI through the PDCCH based on the SS set in the SS set group 2, and the first communication apparatus may monitor the PDCCH based on the SS set in the SS set group 2.

N1<M indicates that the SS set groups have a one-to-one association relationships with the candidate PCells or the candidate scheduling cells, or have a one-to-many association relationship with the candidate PCells or the candidate scheduling cells.

For example, M=3, and N1=2. The candidate PCells or the candidate scheduling cells include: a CC 1, a CC 2, and a CC 3. When the CC 1 is a PCell or a scheduling cell, one SS set group of the scheduled cell is used by the second communication apparatus to perform cross-carrier scheduling in the CC 1, and is used by the first communication apparatus to monitor the PDCCH in the CC 1. When the CC 2 or the CC 3 is a PCell or a scheduling cell, the other SS set group of the scheduled cell is used by the second communication apparatus to perform cross-carrier scheduling in the PCell or the scheduling cell, and is used by the first communication apparatus to monitor the PDCCH in the PCell or the scheduling cell.

Therefore, in the PCell dynamic switching solution or the scheduling cell dynamic switching solution, the second communication apparatus and the first communication apparatus each correspondingly switch an SS set group of the scheduled cell based on the foregoing association relationship.

After the indication information is used to determine the CC 1 as a PCell or a scheduling cell, the second communication apparatus and the first communication apparatus use the CC 1 as a PCell or a scheduling cell. Correspondingly, an SS set in the scheduled cell is switched to an SS set in the SS set group 1. In this way, the second communication apparatus may send the DCI through the PDCCH based on the SS set in the SS set group 1, and the first communication apparatus may monitor the PDCCH based on the SS set in the SS set group 1.

After the indication information is used to determine the CC 2 as a PCell or a scheduling cell, the second communication apparatus and the first communication apparatus use the CC 2 as a PCell or a scheduling cell. Correspondingly, an SS set in the scheduled cell is switched to an SS set in the SS set group 2. In this way, the second communication apparatus may send the DCI through the PDCCH based on the SS set in the SS set group 2, and the first communication apparatus may monitor the PDCCH based on the SS set in the SS set group 2.

After the indication information is used to determine the CC 3 as a PCell or a scheduling cell, the second communication apparatus and the first communication apparatus use the CC 3 as a PCell or a scheduling cell. Correspondingly, an SS set in the scheduled cell is switched to an SS set in the SS set group 2. In this way, the second communication apparatus may send the DCI through the PDCCH based on the SS set in the SS set group 2, and the first communication apparatus may monitor the PDCCH based on the SS set in the SS set group 2.

In addition, in the plurality of SS set groups of the scheduled cell, an association relationship between each SS set group and the candidate PCells or the candidate scheduling cells may be explicitly distinguished.

In some examples, in addition to the first parameter and the second parameter, the SS set further includes a fourth parameter.

The fourth parameter may be represented by using an ID, a serial number, or the like of a cell. In addition, the fourth parameter may be indicated by using one or more bits.

The fourth parameter may be implemented in a plurality of manners.

In a feasible implementation, the fourth parameter may be used to determine a cell that has an association relationship with a corresponding SS set. In other words, SS sets with a same fourth parameter may be considered as belonging to a same SS set group, and SS sets with different fourth parameters may be considered as belonging to different SS set groups.

For example, if a fourth parameter in an SS set is 0, it indicates that a cell that has an association relationship with the SS set is a first cell. If a fourth parameter in an SS set is 1, it indicates that a cell that has an association relationship with the SS set is a second cell. The first cell and the second cell represent two candidate PCells. An SS set whose fourth parameter is 0 belongs to one SS set group, and an SS set whose fourth parameter is 1 belongs to another SS set group.

For another example, if a fourth parameter in an SS set is 0, it indicates that a cell that has an association relationship with the SS set is a first cell. If a fourth parameter in an SS set is 1, it indicates that a cell that has an association relationship with the SS set is a second cell. The first cell and the second cell represent two candidate scheduling cells. An SS set whose fourth parameter is 0 may be considered as belonging to one SS set group, and an SS set whose fourth parameter is 1 may be considered as belonging to another SS set group.

Alternatively, in a feasible implementation, an association relationship between an SS set and the candidate PCells or the candidate scheduling cells may be determined based on whether the SS set includes a fourth parameter. SS sets each including a fourth parameter may be considered as belonging to one SS set group, and SS sets each including no fourth parameter may be considered as belonging to another SS set group.

For example, if an SS set includes a fourth parameter, it indicates that a cell that has an association relationship with the SS set is a first cell. If an SS set does not include a fourth parameter, it indicates that a cell that has an association relationship with the SS set is a second cell. The first cell and the second cell represent two candidate PCells.

For another example, if an SS set includes a fourth parameter, it indicates that a cell that has an association relationship with the SS set is a first cell; or if an SS set does not include a fourth parameter, it indicates that a cell that has an association relationship with the SS set is a second cell. The first cell and the second cell represent two candidate scheduling cells.

Based on the foregoing content, the association relationship between the SS set groups and the candidate PCells or the candidate scheduling cells may be explicitly determined.

For example, the identities of the SS sets in the plurality of SS set groups are different. In other words, identities of SS sets in different SS set groups are different. Quantities of SS sets in different SS set groups may be the same or different.

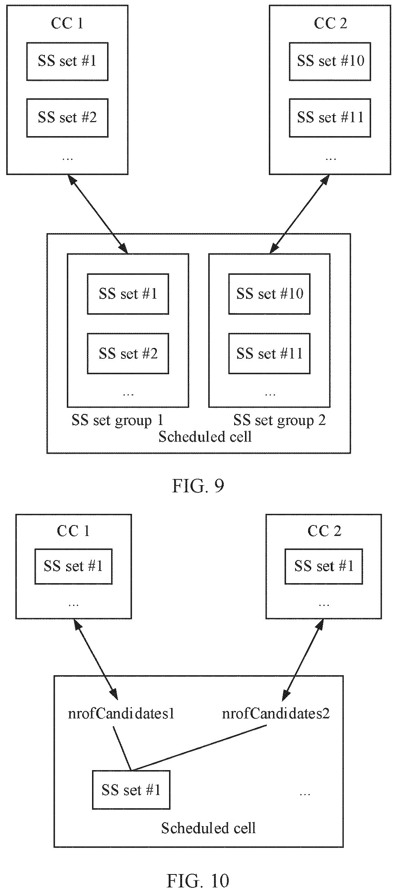

In FIG. 9, two candidate PCells or two candidate scheduling cells (denoted as a CC 1 and a CC 2) are used as an example. PCell switching may be performed between the CC 1 and the CC 2 or scheduling cell switching may be performed between the CC 1 and the CC 2. SS sets in the CC 1 and the CC 2 are independently configured. SS sets whose identities are 1 and 2 may be separately configured for the CC 1, and SS sets whose identities are 10 and 11 may be separately configured for the CC 2. It should be understood that, quantities of SS sets in the CC 1 and the CC 2 may be the same in FIG. 9. Alternatively, quantities of SS sets in the CC 1 and the CC 2 may be different.

Because PCell switching or scheduling cell switching may be performed between the two cells, the scheduled cell correspondingly has two SS set groups: an SS set #1 and an SS set #2 on the left (denoted as an SS set group 1), and an SS set #10 and an SS set #11 on the right (denoted as an SS set group 2). In this case, there is an association relationship between the SS set group 1 of the scheduled cell and the CC 1, and there is an association relationship between the SS set group 2 of the scheduled cell and the CC 2. #1, #2, #10, and #11 may be considered as identities of the SS sets.

The SS sets in the SS set group 1 and the SS set group 2 are independently configured. Therefore, other parameters included in the SS sets in the SS set group 1 and the SS set group 2 may be different or the same. It can be learned that identities of SS sets in different SS set groups of the scheduled cell are different, and second parameters in the SS sets may also be different, so that limitation on scheduling flexibility of cross-carrier scheduling is avoided.

When the CC 1 is a PCell or a scheduling cell, the SS set group 1 is used by the second communication apparatus to perform cross-carrier scheduling in the CC 1, and is used by the first communication apparatus to monitor the PDCCH in the CC 1. When the CC 2 is a PCell or a scheduling cell, the SS set group 2 is used by the second communication apparatus to perform cross-carrier scheduling in the CC 2, and is used by the first communication apparatus to monitor the PDCCH in the CC 2.

Therefore, in the PCell dynamic switching solution or the scheduling cell dynamic switching solution, the second communication apparatus and the first communication apparatus each correspondingly switch an SS set group of the scheduled cell.

After the indication information is used to determine the CC 1 as a PCell or a scheduling cell, the second communication apparatus and the first communication apparatus use the CC 1 as a PCell or a scheduling cell. Correspondingly, an SS set in the scheduled cell is switched to an SS set in the SS set group 1 shown in FIG. 9. In this way, the second communication apparatus may send the DCI through the PDCCH based on the SS set in the SS set group 1, and the first communication apparatus may monitor the PDCCH based on the SS set in the SS set group 1.

After the indication information is used to determine the CC 2 as a PCell or a scheduling cell, the second communication apparatus and the first communication apparatus use the CC 2 as a PCell or a scheduling cell. Correspondingly, an SS set in the scheduled cell is switched to an SS set in the SS set group 2 shown in FIG. 9. In this way, the second communication apparatus may send the DCI through the PDCCH based on the SS set in the SS set group 2, and the first communication apparatus may monitor the PDCCH based on the SS set in the SS set group 2.

In addition, in the plurality of SS set groups of the scheduled cell, an association relationship between each SS set group and the candidate PCells or the candidate scheduling cells may be explicitly distinguished. In some examples, in addition to the first parameter and the second parameter, the SS set further includes a fourth parameter. For the fourth parameter, refer to the foregoing descriptions of the fourth parameter mentioned above. Details are not described herein again.

In the foregoing implementations, the indication information in S101 may indicate to switch the PCell or indicate to switch the scheduling cell, and during PCell switching or scheduling cell switching, an SS set in an SS set group of the scheduled cell is also switched correspondingly based on the association relationship between the SS set groups and the candidate PCells or the candidate scheduling cells. Alternatively, the indication information in S 101 may indicate to switch an SS set group of the scheduled cell, and during switching of an SS set group of the scheduled cell, the PCell or the scheduling cell is also switched correspondingly based on the association relationship between the SS set groups and the candidate PCells or the candidate scheduling cells. Switching an SS set group may also be expressed as activating one SS set group and deactivating another SS set group, or may be expressed as monitoring the PDCCH based on an SS set in one of the SS set groups and stop monitoring the PDCCH based on an SS set in another SS set group.

In the foregoing implementations, the plurality of SS set groups of the scheduled cell may be in one BWP of the scheduled cell.

In conclusion, when the first configuration information is configured as the plurality of SS set groups of the scheduled cell, the second communication apparatus and the first communication apparatus may determine that the 1^{st} parameter set is an SS set group that is in the plurality of SS set groups and that has an association relationship with one cell of the plurality of cells. Therefore, the second communication apparatus sends the DCI in one cell of the plurality of cells based on an SS set in the SS set group, to perform cross-carrier scheduling. Correspondingly, the first communication apparatus monitors the PDCCH in one cell of the plurality of cells based on a parameter in the SS set group. One cell of the plurality of cells is a current PCell or a current scheduling cell.

In some examples, the plurality of parameter sets of the scheduled cell are configured in one SS set in the scheduled cell, and the SS set includes at least a first parameter and a plurality of second parameters, where the first parameter indicates an identity of the SS set, and each of the second parameters indicates an aggregation level of the PDCCH and a quantity of PDCCH candidates corresponding to the aggregation level. That is, the plurality of parameter sets may be considered as a plurality of second parameters in one SS set, and the plurality of second parameters in the SS set have an association relationship with the plurality of candidate PCells or the plurality of candidate scheduling cells.

Therefore, a quantity of SS sets in the scheduled cell may not be increased.

In addition, the scheduled cell may have a plurality of SS sets, and each of the plurality of SS sets may have a plurality of parameter sets.

In the SS set, the first parameter is a parameter searchSpaceId, and the second parameter is a parameter nrofCandidates. The aggregation level of the PDCCH in the second parameter may be of one or more types, and the quantity of PDCCH candidates corresponding to the aggregation level is a quantity of PDCCH candidates corresponding to each type of aggregation level in the aggregation level of the PDCCH. An aggregation level of the PDCCH and a quantity of PDCCH candidates corresponding to the aggregation level that are indicated by each second parameter in the SS set may be the same or different.

In the PCell dynamic switching solution, the plurality of parameter sets (including the 1^{st} parameter set) are configured in one SS set. An identity that is of the SS set and that is indicated by a first parameter in the SS set is the same as an identity of an SS set in a current PCell. In this case, the second communication apparatus may send the DCI on the SS set with the same identity in the PCell, to perform cross-carrier scheduling. The current PCell is a cell used as a PCell at a current moment, that is, a cell that is determined as a PCell based on the indication information. There may be one or more SS sets in the current PCell, and configuration information of each SS set includes at least one of the following parameters: an identity of the SS set, a CORESET of the PDCCH, a periodicity of the PDCCH, an offset of the PDCCH, an intra-slot PDCCH monitoring symbol of the PDCCH, and duration of the PDCCH.

The second communication apparatus sends the DCI in the current PCell based on one of second parameters in an SS set in the scheduled cell and an SS set in the current PCell, to perform cross-carrier scheduling. The first communication apparatus monitors the PDCCH in the current PCell based on one of second parameters in the SS set in the scheduled cell and the SS set in the current PCell. An identity of the SS set in the scheduled cell is the same as an identity of the SS set in the current PCell. The second parameter is one of the plurality of second parameters that has an association relationship with the current PCell.

Specifically, the first communication apparatus determines a PDCCH monitoring occasion based on a periodicity, an offset, an intra-slot PDCCH monitoring symbol, and duration of the SS set in the current PCell, and determines a quantity of PDCCH candidates based on one of second parameters in the SS set in the scheduled cell. Therefore, the first communication apparatus monitors the PDCCH on a CORESET in the SS set in the current PCell. For a specific implementation in which the first communication apparatus monitors the PDCCH, refer to the foregoing descriptions of the PDCCH monitoring mechanism.

Similarly, in the scheduling cell dynamic switching solution, the plurality of parameter sets (including the 1^{st} parameter set) are configured in one SS set. An identity that is of the SS set and that is indicated by a first parameter in the SS set is the same as an identity of an SS set in a current scheduling cell. In this case, the second communication apparatus may send the DCI on the SS set with the same identity in the scheduling cell, to perform cross-carrier scheduling. The current scheduling cell is a cell used as a scheduling cell at a current moment, that is, a cell that is determined as a scheduling cell based on the indication information. There may be one or more SS sets in the current scheduling cell, and configuration information of each SS set includes at least one of the following parameters: an identity of the SS set, a CORESET of the PDCCH, a periodicity of the PDCCH, an offset of the PDCCH, an intra-slot PDCCH monitoring symbol of the PDCCH, and duration of the PDCCH.

The second communication apparatus sends the DCI in the current scheduling cell based on one of second parameters in an SS set in the scheduled cell and an SS set in the current scheduling cell, to perform cross-carrier scheduling. The first communication apparatus monitors the PDCCH in the current scheduling cell based on one of second parameters in the SS set in the scheduled cell and the SS set in the current scheduling cell. An identity of the SS set in the scheduled cell is the same as an identity of the SS set in the current scheduling cell. The second parameter is one of the plurality of second parameters that has an association relationship with the current scheduling cell.

Specifically, the first communication apparatus determines a PDCCH monitoring occasion based on a periodicity, an offset, an intra-slot PDCCH monitoring symbol, and duration of the SS set in the current scheduling cell, and determines a quantity of PDCCH candidates based on one of second parameters in the SS set in the scheduled cell. Therefore, the first communication apparatus monitors the PDCCH on a CORESET in the SS set in the current scheduling cell. For a specific implementation in which the first communication apparatus monitors the PDCCH, refer to the foregoing descriptions of the PDCCH monitoring mechanism.

Using two candidate PCells or two candidate scheduling cells (denoted as a CC 1 and a CC 2) as an example, an SS set #1 in the scheduled cell includes a first parameter and a plurality of second parameters. In this case, PCell switching may be performed between the CC 1 and the CC 2 or scheduling cell switching may be performed between the CC 1 and the CC 2. SS sets in the CC 1 and the CC 2 are independently configured. SS sets whose identities are 1 (denoted as SS sets #1) are separately configured for the CC 1 and the CC 2, and other parameters in the SS set #1 in the CC 1 may be the same as or different from other parameters in the SS set #1 in the CC 2. The SS set #1 in the scheduled cell may have two second parameters, where one of the second parameters has an association relationship with the CC 1, and the other second parameter has an association relationship with the CC 2.

A quantity of the second parameters is not limited in this application. In some examples, the quantity of the second parameters is less than or equal to a quantity of the candidate PCells or a quantity of the candidate scheduling cells.

The quantity of the second parameters is equal to the quantity of the candidate PCells. In this case, each second parameter has an association relationship with one cell of the candidate PCells, that is, each second parameter corresponds to one cell of the candidate PCells.

The quantity of the second parameters may alternatively be less than the quantity of the candidate PCells. In this case, a part of the second parameters has an association relationship with one cell of the candidate PCells, and the remaining second parameters have an association relationship with a plurality of cells in the candidate PCells; or each second parameter has an association relationship with a plurality of cells in the candidate PCells.

Similarly, the quantity of the second parameters is equal to the quantity of the candidate scheduling cells. In this case, each second parameter has an association relationship with one cell of the candidate scheduling cells, that is, each second parameter corresponds to one cell of the candidate scheduling cells.

The quantity of the second parameters may alternatively be less than the quantity of the candidate scheduling cells. In this case, a part of the second parameters has an association relationship with one cell of the candidate scheduling cells, and the remaining second parameters have an association relationship with a plurality of cells in the candidate scheduling cells; or each second parameter has an association relationship with a plurality of cells in the candidate scheduling cells.

It is assumed that the quantity of the candidate PCells or the quantity of the candidate scheduling cells is M, and a quantity of second parameters in one SS set in the scheduled cell is N2, where both M and N2 are positive integers greater than or equal to 2.

N2=M indicates that the plurality of second parameters have a one-to-one association relationship with the candidate PCells or the candidate scheduling cells.

For example, M=N=2. As shown in FIG. 10, the SS set #1 in the scheduled cell includes two second parameters (where nrofCandidates1 and nrofCandidates2 are used for illustration in FIG. 10). The candidate PCells or the candidate scheduling cells include: a CC 1 and a CC 2.

When the CC 1 is a PCell or a scheduling cell, nrofCandidates1 is used by the second communication apparatus to send the DCI and perform cross-carrier scheduling in the CC 1, and is used by the first communication apparatus to monitor the PDCCH in the CC 1. When the CC 2 is a PCell or a scheduling cell, nrofCandidates2 is used by the second communication apparatus to send the DCI and perform cross-carrier scheduling in the CC 2, and is used by the first communication apparatus to monitor the PDCCH in the CC 2.

Therefore, in the PCell dynamic switching solution or the scheduling cell dynamic switching solution, the second communication apparatus and the first communication apparatus each correspondingly switch a second parameter in the SS set #1 in the scheduled cell based on the foregoing association relationship.

After the indication information is used to determine the CC 1 as a PCell or a scheduling cell, the second communication apparatus and the first communication apparatus use the CC 1 as a PCell or a scheduling cell. Correspondingly, the second parameter in the SS set #1 in the scheduled cell is switched to nrofCandidates1. In this way, the second communication apparatus may send the DCI through the PDCCH based on nrofCandidates1, and the first communication apparatus may monitor the PDCCH based on nrofCandidates1.

After the indication information is used to determine the CC 2 as a PCell or a scheduling cell, the second communication apparatus and the first communication apparatus use the CC 2 as a PCell or a scheduling cell. Correspondingly, the second parameter in the SS set #1 in the scheduled cell is switched to nrofCandidates2. In this way, the second communication apparatus may send the DCI through the PDCCH based on nrofCandidates2, and the first communication apparatus may monitor the PDCCH based on nrofCandidates2.

N2<M indicates that the second parameters have a one-to-one association relationships with the candidate PCells or the candidate scheduling cells, or have a one-to-many association relationship with the candidate PCells or the candidate scheduling cells.

For example, M=3, and N2=2. The candidate PCells or the candidate scheduling cells include: a CC 1, a CC 2, and a CC 3.

In the SS set in the scheduled cell, when the CC 1 is a PCell or a scheduling cell, one of the second parameters is used by the second communication apparatus to perform cross-carrier scheduling in the CC 1, and is used by the first communication apparatus to monitor the PDCCH in the CC 1. When the CC 2 or the CC 3 is a PCell or a scheduling cell, the other second parameter is used by the second communication apparatus to perform cross-carrier scheduling in the PCell or the scheduling cell, and is used by the first communication apparatus to monitor the PDCCH in the PCell or the scheduling cell.

Therefore, in the PCell dynamic switching solution or the scheduling cell dynamic switching solution, the second communication apparatus and the first communication apparatus each correspondingly switch a second parameter in the SS set in the scheduled cell based on the foregoing association relationship.

After the indication information is used to determine the CC 1 as a PCell or a scheduling cell, the second communication apparatus and the first communication apparatus use the CC 1 as a PCell or a scheduling cell. Correspondingly, the second parameter in the SS set in the scheduled cell is switched to nrofCandidates1 shown in FIG. 10. In this way, the second communication apparatus may send the DCI through the PDCCH based on nrofCandidates1, and the first communication apparatus may monitor the PDCCH based on nrofCandidates1.

After the indication information is used to determine the CC 2 as a PCell or a scheduling cell, the second communication apparatus and the first communication apparatus use the CC 2 as a PCell or a scheduling cell. Correspondingly, the second parameter in the SS set in the scheduled cell is switched to nrofCandidates2 shown in FIG. 10. In this way, the second communication apparatus may send the DCI through the PDCCH based on nrofCandidates2, and the first communication apparatus may monitor the PDCCH based on nrofCandidates2.

After the indication information is used to determine the CC 3 as a PCell or a scheduling cell, the second communication apparatus and the first communication apparatus use the CC 3 as a PCell or a scheduling cell. Correspondingly, the second parameter in the SS set in the scheduled cell is switched to nrofCandidates2 shown in FIG. 10. In this way, the second communication apparatus may send the DCI through the PDCCH based on nrofCandidates2, and the first communication apparatus may monitor the PDCCH based on nrofCandidates2.

In addition, in one SS set in the scheduled cell, an association relationship between each second parameter and the candidate PCells or the candidate scheduling cells may be explicitly or implicitly distinguished.

In some examples, in addition to the first parameter and the second parameter, the SS set further includes a fifth parameter. For example, the fifth parameter may be included in the second parameter. In other words, in addition to indicating each aggregation level of the PDCCH and a quantity of PDCCH candidates corresponding to each aggregation level, the second parameter further includes the fifth parameter. The second parameter is further used to determine a candidate PCell or a candidate scheduling cell that has an association relationship with the second parameter. Certainly, the fifth parameter may also be included in the second parameter, and the fifth parameter is further used to determine a candidate PCell or a candidate scheduling cell that has an association relationship with corresponding one or more second parameters.

The fifth parameter may be represented by using an ID, a serial number, or the like of a cell. In addition, the fifth parameter may be indicated by using one or more bits.

The fifth parameter indicates a cell that has an association relationship with the second parameter in the SS set.

For example, if the fifth parameter is 0, it indicates that a cell that has an association relationship with the corresponding second parameter is a first cell. If the fifth parameter is 1, it indicates that a cell that has an association relationship with the corresponding second parameter is a second cell. The first cell and the second cell represent two candidate PCells.

For another example, if the fifth parameter is 0, it indicates that a cell that has an association relationship with the corresponding second parameter is a first cell. If the fifth parameter is 1, it indicates that a cell that has an association relationship with the corresponding second parameter is a second cell. The first cell and the second cell represent two candidate scheduling cells.

Alternatively, an association relationship between a second parameter and the candidate PCells or the candidate scheduling cells may be determined based on whether the second parameter in the SS set includes a fifth parameter. For example, if one second parameter includes a fifth parameter, it indicates that a cell that has an association relationship with the second parameter is a first cell. If the other second parameter does not include a fifth parameter, it indicates that a cell that has an association relationship with the second parameter is a second cell. The first cell and the second cell represent two candidate PCells or two candidate scheduling cells.

Alternatively, in some examples, an association relationship between the plurality of second parameters and the plurality of candidate PCells or the plurality of candidate scheduling cells may be determined according to a preset rule.

For example, based on an order of the second parameters, a 1^{st} second parameter in the SS set has an association relationship with a 1^{st} cell in the candidate PCells or the candidate scheduling cells, a 2^{nd} second parameter in the SS set has an association relationship with a 2^{nd} cell in the candidate PCells or the candidate scheduling cells, and a 3^{rd} second parameter in the SS set has an association relationship with a 3^{rd} cell in the candidate PCells or the candidate scheduling cells. The rest can be deduced by analogy.

Based on the foregoing content, the association relationship between the plurality of second parameters and the candidate PCells or the candidate scheduling cells may be explicitly or implicitly determined.

In the foregoing implementations, the indication information in S101 may indicate to switch the PCell or indicate to switch the scheduling cell, and during PCell switching or scheduling cell switching, a second parameter in an SS set in the scheduled cell is also switched correspondingly based on the association relationship between the second parameters and the candidate PCells or the candidate scheduling cells. Alternatively, the indication information in S101 may indicate to switch a second parameter in an SS set in the scheduled cell, and during switching of a second parameter in an SS set in the scheduled cell, the PCell or the scheduling cell is also switched correspondingly based on the association relationship between the second parameters and the candidate PCells or the candidate scheduling cells. Switching a second parameter in an SS set may also be expressed as activating one second parameter in the SS set and deactivating another second parameter in the SS set, or may be expressed as monitoring the PDCCH based on one second parameter in the SS set and stopping monitoring the PDCCH based on another second parameter in the SS set.

In conclusion, when the first configuration information is configured as a first parameter and a plurality of second parameters configured in one search space set of the scheduled cell, the second communication apparatus and the first communication apparatus may determine that the 1^{st} parameter set is the first parameter and one of the second parameters that are in the SS set in the scheduled cell and that have an association relationship with one cell of the plurality of cells. Therefore, the second communication apparatus sends the DCI in one cell of the plurality of cells based on the first parameter and the second parameter that are in the SS set in the scheduled cell, to perform cross-carrier scheduling. Correspondingly, the first communication apparatus monitors the PDCCH in one cell of the plurality of cells based on the first parameter and the second parameter that are in the SS set in the scheduled cell. One cell of the plurality of cells is a current PCell or a current scheduling cell.

In some examples, the plurality of parameter sets of the scheduled cell are configured by using a plurality of BWPs of the scheduled cell, configuration information of one BWP includes one or more SS sets, and each SS set includes at least a first parameter and a second parameter, where the first parameter indicates an identity of the SS set, and the second parameter indicates an aggregation level of the PDCCH and a quantity of PDCCH candidates corresponding to the aggregation level. That is, the plurality of BWPs of the scheduled cell have an association relationship with the plurality of candidate PCells or the plurality of candidate scheduling cells.

The first parameter is a parameter searchSpaceId in the SS set. The second parameter is a parameter nrofCandidates in the SS set. The aggregation level of the PDCCH in the second parameter may be of one or more types, and the quantity of PDCCH candidates corresponding to the aggregation level is a quantity of PDCCH candidates corresponding to each type of aggregation level in the aggregation level of the PDCCH.

In the PCell dynamic switching solution, the 1^{st} parameter set is an SS set included in configuration information of one of the BWPs of the scheduled cell. In SS sets in the BWP, an identity that is of an SS set and that is indicated by a first parameter is the same as an identity of an SS set in a current PCell, that is, an identity of at least one SS set in the BWP is the same as an identity of at least one SS set in the current PCell. In this case, the second communication apparatus may send the DCI on the SS set with the same identity in the PCell, to perform cross-carrier scheduling. The current PCell is a cell used as a PCell at a current moment. There may be one or more SS sets in the current PCell, and configuration information of each SS set includes at least one of the following parameters: a CORESET of the PDCCH, a periodicity of the PDCCH, an offset of the PDCCH, an intra-slot PDCCH monitoring symbol of the PDCCH, and duration of the PDCCH.

The second communication apparatus sends the DCI in the current PCell based on a second parameter in an SS set in the scheduled cell and an SS set in the current PCell, to perform cross-carrier scheduling. The first communication apparatus monitors the PDCCH in the current PCell based on the second parameter in the SS set in the scheduled cell and the SS set in the current PCell. The SS set in the scheduled cell is an SS set in the BWP, and an identity of the SS set in the scheduled cell is the same as an identity of the SS set in the current PCell.

Specifically, the first communication apparatus determines a PDCCH monitoring occasion based on a periodicity, an offset, an intra-slot PDCCH monitoring symbol, and duration of the SS set in the current PCell, and determines a quantity of PDCCH candidates based on the second parameter in the SS set in the scheduled cell. Therefore, the first communication apparatus monitors the PDCCH on a CORESET in the SS set in the current PCell. For a specific implementation in which the first communication apparatus monitors the PDCCH, refer to the foregoing descriptions of the PDCCH monitoring mechanism.

Similarly, in the scheduling cell dynamic switching solution, the 1^{st} parameter set is an SS set included in configuration information of one of the BWPs of the scheduled cell. In SS sets in the BWP, an identity that is of an SS set and that is indicated by a first parameter is the same as an identity of an SS set in a current scheduling cell, that is, an identity of at least one SS set in the BWP is the same as an identity of at least one SS set in the current scheduling cell. In this case, the second communication apparatus may send the DCI on the SS set with the same identity in the scheduling cell, to perform cross-carrier scheduling. The current scheduling cell is a cell used as a scheduling cell at a current moment. There may be one or more SS sets in the current scheduling cell, and configuration information of each SS set includes at least one of the following parameters: a CORESET of the PDCCH, a periodicity of the PDCCH, an offset of the PDCCH, an intra-slot PDCCH monitoring symbol of the PDCCH, and duration of the PDCCH.

The second communication apparatus sends the DCI in the current scheduling cell based on a second parameter in an SS set in the scheduled cell and an SS set in a current scheduling cell, to perform cross-carrier scheduling. The first communication apparatus may monitor the PDCCH in the current scheduling cell based on the second parameter in the SS set in the scheduled cell and the SS set in the current scheduling cell. The SS set in the scheduled cell is an SS set in the BWP, and an identity of the SS set in the scheduled cell is the same as an identity of the SS set in the current scheduling cell.

Specifically, the first communication apparatus determines a PDCCH monitoring occasion based on a periodicity, an offset, an intra-slot PDCCH monitoring symbol, and duration of the SS set in the current scheduling cell, and determines a quantity of PDCCH candidates based on the second parameter in the SS set in the scheduled cell. Therefore, the first communication apparatus monitors the PDCCH on a CORESET in the SS set in the current scheduling cell. For a specific implementation in which the first communication apparatus monitors the PDCCH, refer to the foregoing descriptions of the PDCCH monitoring mechanism.

Identities of SS sets in all the BWPs of the scheduled cell are different, and quantities of SS sets in all the BWPs of the scheduled cell may be the same or different.

A quantity of the BWPs is not limited in this application. In some examples, the quantity of the BWPs is less than or equal to a quantity of the candidate PCells or a quantity of the candidate scheduling cells.

The quantity of the BWPs is equal to the quantity of the candidate PCells. In this case, each BWP has an association relationship with one cell of the candidate PCells, that is, each BWP corresponds to one cell of the candidate PCells.

The quantity of the BWPs may alternatively be less than the quantity of the candidate PCells. In this case, a part of the BWPs has an association relationship with one cell of the candidate PCells, and the remaining BWPs have an association relationship with a plurality of cells in the candidate PCells; or each BWP has an association relationship with a plurality of cells in the candidate PCells.

Similarly, the quantity of the BWPs is equal to the quantity of the candidate scheduling cells. In this case, each BWP has an association relationship with one cell of the candidate scheduling cells, that is, each BWP corresponds to one cell of the candidate scheduling cells.

The quantity of the BWPs may alternatively be less than the quantity of the candidate scheduling cells. In this case, a part of the BWPs has an association relationship with one cell of the candidate scheduling cells, and the remaining BWPs have an association relationship with a plurality of cells in the candidate scheduling cells; or each BWP has an association relationship with a plurality of cells in the candidate scheduling cells.

It is assumed that the quantity of the candidate PCells or the quantity of the candidate scheduling cells is M, and the quantity of the BWPs in the scheduled cell is N3, where both M and N3 are positive integers greater than or equal to 2.

N3=M indicates that the BWPs have a one-to-one association relationship with the candidate PCells or the candidate scheduling cells.

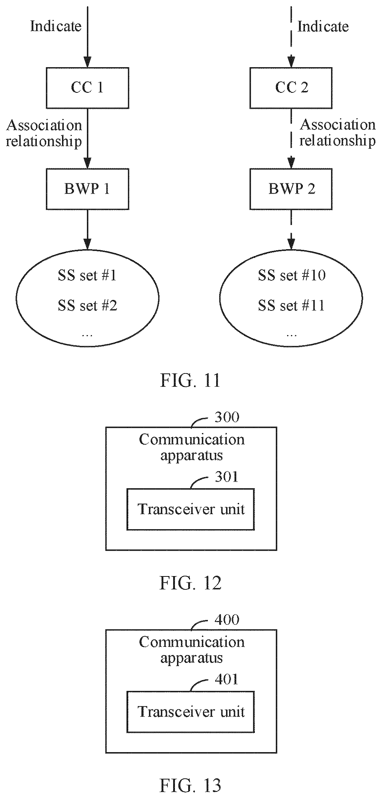

For example, M=N=2. As shown in FIG. 11, the second communication apparatus may configure two BWPs (for example, a BWP 1 and a BWP 2) for the scheduled cell. SS sets in the BWP 1 includes an SS set #1 and an SS set #2, and SS sets in the BWP 2 includes an SS set #10 and an SS set #11. The candidate PCells or the candidate scheduling cells include: a CC 1 and a CC 2.

When the CC 1 is a PCell or a scheduling cell, the SS sets in the BWP 1 are used by the second communication apparatus to perform cross-carrier scheduling in the CC 1, and are used by the first communication apparatus to monitor the PDCCH in the CC 1. When the CC 2 is a PCell or a scheduling cell, the SS sets in the BWP 2 are used by the second communication apparatus to perform cross-carrier scheduling in the CC 2, and are used by the first communication apparatus to monitor the PDCCH in the CC 2.

Therefore, during PCell dynamic switching or scheduling cell dynamic switching, the second communication apparatus and the first communication apparatus each correspondingly switch a BWP of the scheduled cell based on the foregoing association relationship.

After the indication information is used to determine the CC 1 as a PCell or a scheduling cell, the second communication apparatus and the first communication apparatus use the CC 1 as a PCell or a scheduling cell. Correspondingly, a BWP of the scheduled cell is switched to the BWP 1. In this way, the second communication apparatus may send the DCI through the PDCCH based on the SS set in the BWP 1, and the first communication apparatus may monitor the PDCCH based on the SS sets in the BWP 1.

After the indication information is used to determine the CC 2 as a PCell or a scheduling cell, the second communication apparatus and the first communication apparatus use the CC 2 as a PCell or a scheduling cell. Correspondingly, a BWP of the scheduled cell is switched to the BWP 2. In this way, the second communication apparatus may send the DCI through the PDCCH based on the SS set in the BWP 2, and the first communication apparatus may monitor the PDCCH based on the SS sets in the BWP 2.

N3<M indicates that the BWPs have a one-to-one association relationships with the candidate PCells or the candidate scheduling cells, or have a one-to-many association relationship with the candidate PCells or the candidate scheduling cells.

For example, M=3, and N3=2. The candidate PCells or the candidate scheduling cells include: a CC 1, a CC 2, and a CC 3.

In the plurality of BWPs of the scheduled cell, when the CC 1 is a PCell or a scheduling cell, SS sets in one of the BWPs are used by the second communication apparatus to perform cross-carrier scheduling in the CC 1, and are used by the first communication apparatus to monitor the PDCCH in the CC 1. When the CC 2 or the CC 3 is a PCell or a scheduling cell, SS sets in the other BWP are used by the second communication apparatus to perform cross-carrier scheduling in the PCell or the scheduling cell, and is used by the first communication apparatus to monitor the PDCCH in the PCell or the scheduling cell.

Therefore, during PCell dynamic switching or scheduling cell dynamic switching, the second communication apparatus and the first communication apparatus each correspondingly switch a BWP of the scheduled cell based on the foregoing association relationship.

After the indication information is used to determine the CC 1 as a PCell or a scheduling cell, the second communication apparatus and the first communication apparatus use the CC 1 as a PCell or a scheduling cell. Correspondingly, a BWP of the scheduled cell is switched to the BWP 1. In this way, the second communication apparatus may send the DCI through the PDCCH based on the SS set in the BWP 1, and the first communication apparatus may monitor the PDCCH based on the SS sets in the BWP 1.

After the indication information is used to determine the CC 2 as a PCell or a scheduling cell, the second communication apparatus and the first communication apparatus use the CC 2 as a PCell or a scheduling cell. Correspondingly, a BWP of the scheduled cell is switched to the BWP 2. In this way, the second communication apparatus may send the DCI through the PDCCH based on the SS set in the BWP 2, and the first communication apparatus may monitor the PDCCH based on the SS sets in the BWP 2.

After the indication information is used to determine the CC 3 as a PCell or a scheduling cell, the second communication apparatus and the first communication apparatus use the CC 3 as a PCell or a scheduling cell. Correspondingly, a BWP of the scheduled cell is switched to the BWP 2. In this way, the second communication apparatus may send the DCI through the PDCCH based on the SS set in the BWP 2, and the first communication apparatus may monitor the PDCCH based on the SS sets in the BWP 2.

In addition, in the plurality of BWPs of the scheduled cell, an association relationship between each BWP and the candidate PCells or the candidate scheduling cells may be explicitly or implicitly determined.

In some examples, the configuration information of the BWP of the scheduled cell may further include a sixth parameter.

The sixth parameter may be represented by using an ID, a serial number, and the like of a cell. In addition, the sixth parameter may be indicated by using one or more bits.

The sixth parameter may be implemented in a plurality of manners. In a feasible implementation, the sixth parameter is used to determine a cell that has an association relationship with the BWP.

For example, if the sixth parameter is 0, it indicates that a cell that has an association relationship with the BWP set is a first cell. If the sixth parameter is 1, it indicates that a cell that has an association relationship with the BWP set is a second cell. The first cell and the second cell represent two candidate PCells.

For another example, if the sixth parameter is 0, it indicates that a cell that has an association relationship with the BWP set is a first cell. If the sixth parameter is 1, it indicates that a cell that has an association relationship with the BWP set is a second cell. The first cell and the second cell represent two candidate scheduling cells.

Alternatively, in a feasible implementation, an association relationship between a BWP and the candidate PCells or the candidate scheduling cells may be determined based on whether the configuration information of the BWP includes a sixth parameter.

For example, if configuration information of a BWP includes a sixth parameter, it indicates that a cell that has an association relationship with the BWP is a first cell. If configuration information of a BWP does not include a sixth parameter, it indicates that a cell that has an association relationship with the BWP is a second cell. The first cell and the second cell represent two candidate PCells.

For another example, if configuration information of a BWP includes a sixth parameter, it indicates that a cell that has an association relationship with the BWP is a first cell; or if configuration information of a BWP does not include a sixth parameter, it indicates that a cell that has an association relationship with the BWP is a second cell. The first cell and the second cell represent two candidate scheduling cells.

In some examples, an association relationship between the plurality of BWPs of the scheduled cell and the candidate PCells or the candidate scheduling cells is determined according to a preset rule in addition to the sixth parameter.

For example, based on an order (for example, a first-to-last order or a reverse order) of the BWPs of the scheduled cell, a 1^{st} BWP has an association relationship with a 1^{st} cell in the candidate PCells or the candidate scheduling cells, a 2^{nd} BWP has an association relationship with a 2^{nd} cell in the candidate PCells or the candidate scheduling cells, and a 3^{rd} BWP has an association relationship with a 3^{rd} cell in the candidate PCells or the candidate scheduling cells. The rest can be deduced by analogy.

Based on the foregoing content, the association relationship between the plurality of BWPs and the candidate PCells or the candidate scheduling cells may be explicitly or implicitly determined.

In the foregoing implementations, the indication information in S101 may indicate to switch the PCell or indicate to switch the scheduling cell, and during PCell switching or scheduling cell switching, a BWP of the scheduled cell is also switched correspondingly based on the association relationship between the BWPs and the candidate PCells or the candidate scheduling cells. Alternatively, the indication information in S101 may indicate to switch a BWP of the scheduled cell, and during switching of a BWP of the scheduled cell, the PCell or the scheduling cell is also switched correspondingly based on the association relationship between the BWPs and the candidate PCells or the candidate scheduling cells. Switching a BWP may also be expressed as activating one BWP and deactivating another BWP, or may be expressed as monitoring the PDCCH based on an SS set in one of the BWPs and stop monitoring the PDCCH based on an SS set in another BWP.

In conclusion, when the first configuration information is configured as the plurality of BWPs of the scheduled cell, the second communication apparatus and the first communication apparatus may determine that the 1^{st} parameter set is an SS set in a BWP that is in the plurality of BWPs and that has an association relationship with one cell of the plurality of cells. Therefore, the second communication apparatus sends the DCI in one cell of the plurality of cells based on the SS set in the BWP, to perform cross-carrier scheduling. Correspondingly, the first communication apparatus monitors the PDCCH in one cell of the plurality of cells based on the SS set in the BWP. One cell of the plurality of cells is a current PCell or a current scheduling cell.

Based on the descriptions of the foregoing embodiments, before the second communication apparatus performs S101, in addition to the first configuration information, the second communication apparatus may further send second configuration information to the first communication apparatus. Correspondingly, before the first communication apparatus receives the indication information, the first communication apparatus may further receive the second configuration information sent by the second communication apparatus.

The second configuration information is used to configure a plurality of cells. The plurality of cells are candidate PCells or candidate scheduling cells.

A manner for sending the second configuration information is not limited in this application.

In some examples, the second configuration information may be carried in the RRC signaling. Certainly, the second configuration information may alternatively be carried in other signaling. This is not limited in this application.

In some examples, the second configuration information and the first configuration information may be carried in a same signaling, or may be carried in different signaling.

In some examples, the second communication apparatus may send the second configuration information to the first communication apparatus in a current PCell. Certainly, the second communication apparatus may alternatively send the second configuration information in another cell. This is not limited in this application.

Therefore, the first communication apparatus may learn of, based on the second configuration information, cells between which the first communication apparatus can dynamically switch a PCell, or cells between which the first communication apparatus can dynamically switch a scheduling cell.

A manner for configuring the second configuration information is not limited in this application.

In some examples, the second configuration information includes at least a third parameter.

The third parameter may be represented by using an ID, a serial number, or the like of a cell. In addition, the third parameter may be indicated by using one or more bits.

For example, the third parameter may be implemented in a plurality of manners.

In a feasible implementation the third parameter indicates a cell identity (cell ID) of a cell that may be used as a candidate PCell or a candidate scheduling cell.

In a feasible implementation, whether each cell is a candidate PCell or a candidate scheduling cell is determined based on whether configuration information of each cell includes a third parameter. For example, if configuration information of a cell includes a third parameter, it indicates that the cell is a candidate PCell or a candidate scheduling cell.

In a feasible implementation, the third parameter is a cell identity of each cell, and the third parameter is carried in configuration information of each cell. Whether a cell is a candidate PCell or a candidate scheduling cell is determined based on a quantity of cell identities included in a third parameter in configuration information of the cell.

In the PCell dynamic switching solution, when the third parameter includes a plurality of cell identities (for example, two cell identities), it indicates that the cell is a candidate PCell. That is, each candidate PCell includes a plurality of cell identities, and the plurality of cell identities each include a first preset identity different from another cell identity of the candidate PCell.

In the scheduling cell dynamic switching solution, when the third parameter includes a plurality of cell identities (for example, two cell identities), it indicates that the cell is a candidate scheduling cell. That is, each candidate scheduling cell includes a plurality of cell identities, and the plurality of cell identities each include a first preset identity different from another cell identity of the candidate scheduling cell.

Using two candidate PCells or two candidate scheduling cells (a cell 1 and a cell 2) as an example, a third parameter of the cell 1 includes a first preset identity and a second preset identity, and a third parameter of the cell 2 includes a first preset identity and a third preset identity, where the second preset identity is different from the third preset identity. Further, in S101, the cell 1 is determined as a PCell or a scheduling cell, and the second communication apparatus and the first communication apparatus set a cell identity of the cell 1 as the first preset identity, and set a cell identity of the cell 2 as the third preset identity; or the cell 2 is determined as a PCell or a scheduling cell, and the second communication apparatus and the first communication apparatus set a cell identity of the cell 2 as the first preset identity, and set a cell identity of the cell 1 as the second preset identity. In this implementation, the indication information in S101 may indicate to switch a cell identity. During cell identity switching, the PCell or the scheduling cell is also switched correspondingly. The cell identity switching may also be expressed as activating one cell identity and deactivating another cell identity.

For example, this application further provides a communication apparatus.

FIG. 12 is a diagram of a structure of a communication apparatus according to an embodiment of this application.

As shown in FIG. 12, the communication apparatus 300 may exist independently, or may be integrated into another device, and may communicate with the second communication apparatus mentioned above, to implement an operation corresponding to the first communication apparatus in the foregoing method embodiments.

The communication apparatus 300 may include a transceiver unit 301. The transceiver unit 301 may implement a corresponding communication function. The transceiver unit 301 may also be referred to as a communication interface or a communication unit.

Optionally, the communication apparatus 300 may further include a processing unit and/or a storage unit. The processing unit is configured to process data. The storage unit may be configured to store instructions and/or data. The processing unit may read the instructions and/or the data in the storage unit, to cause the communication apparatus 300 to implement the foregoing method embodiments.

The communication apparatus 300 may be configured to perform an action performed by the first communication apparatus in the foregoing method embodiments. The communication apparatus 300 may be the first communication apparatus or a component that may be disposed in the first communication apparatus. The transceiver unit 301 is configured to perform a receiving-related operation of the first communication apparatus in the foregoing method embodiments.

Optionally, the transceiver unit 301 may include a sending unit and a receiving unit. The sending unit is configured to perform a sending operation in the foregoing method embodiments. The receiving unit is configured to perform a receiving operation in the foregoing method embodiments.

It should be noted that the communication apparatus 300 may include the sending unit, but does not include the receiving unit, or the communication apparatus 300 may include the receiving unit, but does not include the sending unit. Specifically, this may depend on whether the foregoing solution performed by the communication apparatus 300 includes a sending action and a receiving action.

In an example, the communication apparatus 300 is configured to perform an action performed by the first communication apparatus in the foregoing embodiment shown in FIG. 6.

The communication apparatus 300 may include a transceiver unit 301.

The transceiver unit 301 is configured to receive indication information sent by a second communication apparatus, where the indication information is used to determine one cell of a plurality of cells as a PCell or a scheduling cell.

The transceiver unit 301 is further configured to monitor a physical downlink control channel in one cell of the plurality of cells based on a 1^{st} parameter set, where the 1^{st} parameter set is a parameter set that is in a plurality of parameter sets of a scheduled cell and that has an association relationship with one cell of the plurality of cells, parameters in the plurality of parameter sets of the scheduled cell are parameters in a search space set, and the plurality of parameter sets of the scheduled cell have an association relationship with the plurality of cells.

It should be understood that the foregoing corresponding processes performed by the units are described in detail in the foregoing method embodiments. For brevity, details are not described herein again.

The processing unit in the foregoing embodiments may be implemented by at least one processor or a processor-related circuit. The transceiver unit 301 may be implemented by a transceiver or a transceiver-related circuit. The transceiver unit 301 may also be referred to as a communication unit or a communication interface. The storage unit may be implemented by at least one memory.

For example, this application further provides a communication apparatus.

FIG. 13 is a diagram of a structure of a communication apparatus according to an embodiment of this application.

As shown in FIG. 13, the communication apparatus 400 may exist independently, or may be integrated into another device, and may communicate with the first communication apparatus mentioned above, to implement an operation corresponding to the second communication apparatus in the foregoing method embodiments.

The communication apparatus 400 may include a transceiver unit 401. The transceiver unit 401 may implement a corresponding communication function. The transceiver unit 401 may also be referred to as a communication interface or a communication unit.

Optionally, the communication apparatus 400 may further include a processing unit and/or a storage unit. The processing unit is configured to process data. The storage unit may be configured to store instructions and/or data. The processing unit may read the instructions and/or the data in the storage unit, to cause the communication apparatus 400 to implement the foregoing method embodiments.

The communication apparatus 400 may be configured to perform an action performed by the second communication apparatus in the foregoing method embodiments. The communication apparatus 400 may be the second communication apparatus or a component that may be disposed in the second communication apparatus. The transceiver unit 401 is configured to perform a receiving-related operation of the second communication apparatus in the foregoing method embodiments.

Optionally, the transceiver unit 401 may include a sending unit and a receiving unit. The sending unit is configured to perform a sending operation in the foregoing method embodiments. The receiving unit is configured to perform a receiving operation in the foregoing method embodiments.

It should be noted that the communication apparatus 400 may include the sending unit, but does not include the receiving unit, or the communication apparatus 400 may include the receiving unit, but does not include the sending unit. Specifically, this may depend on whether the foregoing solution performed by the communication apparatus 400 includes a sending action and a receiving action.

In an example, the communication apparatus 400 is configured to perform an action performed by the second communication apparatus in the foregoing embodiment shown in FIG. 6.

The communication apparatus 400 may include a transceiver unit 401.

The transceiver unit 401 is configured to send indication information to a first communication apparatus, where the indication information is used to determine one cell of a plurality of cells as a PCell or a scheduling cell.

The transceiver unit 401 is further configured to send downlink control information carried on a physical downlink control channel to the first communication apparatus in one cell of the plurality of cells based on a 1^{st} parameter set, where the 1^{st} parameter set is a parameter set that is in a plurality of parameter sets of a scheduled cell and that has an association relationship with one cell of the plurality of cells, parameters in the plurality of parameter sets of the scheduled cell are parameters in a search space set, and the plurality of parameter sets of the scheduled cell have an association relationship with the plurality of cells.

It should be understood that the foregoing corresponding processes performed by the units are described in detail in the foregoing method embodiments. For brevity, details are not described herein again.

The processing unit in the foregoing embodiments may be implemented by at least one processor or a processor-related circuit. The transceiver unit 401 may be implemented by a transceiver or a transceiver-related circuit. The transceiver unit 401 may also be referred to as a communication unit or a communication interface. The storage unit may be implemented by at least one memory.

For example, this application further provides a communication apparatus.

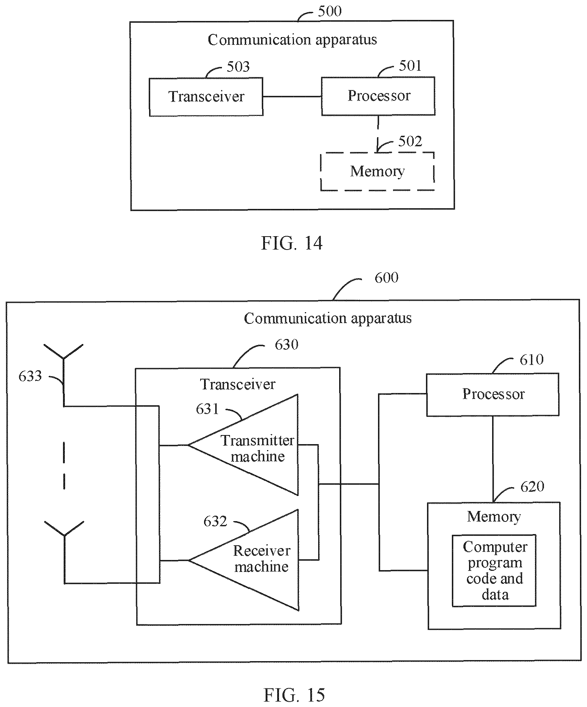

FIG. 14 is a diagram of a hardware structure of a communication apparatus according to an embodiment of this application.

The communication apparatus 500 includes a processor 501. The processor 501 is coupled to a memory 502. The memory 502 is configured to store an executable program or instructions and/or data. The processor 501 is configured to execute the executable program or instructions and/or data stored in the memory 502, to perform the method in the foregoing method embodiments.

Optionally, the communication apparatus 500 includes one or more processors 501.

Optionally, as shown in FIG. 14, the communication apparatus 500 may further include the memory 502.

Optionally, the communication apparatus 500 may include one or more memories 502.

Optionally, the memory 502 and the processor 501 may be integrated together, or separately disposed.

As shown in FIG. 14, the communication apparatus 500 may further include a transceiver 503. The transceiver 503 is configured to receive and/or send a signal. For example, the processor 501 is configured to control the transceiver 503 to receive and/or send a signal.

In a solution, the communication apparatus 500 is configured to implement an operation performed by the first communication apparatus in the foregoing method embodiments.

For example, the processor 501 is configured to implement a processing-related operation performed by the first communication apparatus in the foregoing method embodiments, and the transceiver 503 is configured to implement a receiving/sending-related operation performed by the first communication apparatus in the foregoing method embodiments.

In another solution, the communication apparatus 500 is configured to implement an operation performed by the second communication apparatus in the foregoing method embodiments.

For example, the processor 501 is configured to implement a processing-related operation performed by the second communication apparatus in the foregoing method embodiments, and the transceiver 503 is configured to implement a receiving/sending-related operation performed by the second communication apparatus in the foregoing method embodiments.

In the communication apparatus shown in FIG. 14, a component that is in the transceiver 503 and that is configured to receive power may be considered as a receiving unit, and a component that is in the transceiver 503 and that is configured to implement a sending function may be considered as a sending unit. In other words, the transceiver 503 may include a receiver and a transmitter. The transceiver 503 may also be referred to as a transceiver machine, a transceiver unit, a transceiver circuit, or the like. The receiver may also be referred to as a receiver machine, a receiving unit, a receiver circuit, or the like. The transmitter may also be referred to as a transmitter machine, a transmitting unit, a transmitter circuit, or the like. The processor 501 has a processing function, and the processor 501 may be referred to as a processing unit. The memory 502 is configured to store an executable program or instructions and data, and the memory 502 may also be referred to as a storage unit.

For example, this application further provides a communication apparatus.

The communication apparatus 600 may be a first communication apparatus or a second communication apparatus, or may be a chip of the first communication apparatus or the second communication apparatus. The communication apparatus 600 may be configured to perform the operation performed by the first communication apparatus or the second communication apparatus in the foregoing method embodiments.

FIG. 15 is a diagram of a hardware structure of a communication apparatus according to an embodiment of this application.

As shown in FIG. 15, the communication apparatus 600 includes a part 610, a part 620, and a part 630. The part 610 is mainly configured to: perform baseband processing, control a base station, and the like. The part 610 is usually a control center of the base station, may be usually referred to as a processor or a processing unit, and is configured to control a first communication apparatus or a second communication apparatus to perform a processing operation on a side of the first communication apparatus or the second communication apparatus in the foregoing method embodiments. The part 620 is mainly configured to store an executable program or instructions and data, and may be usually referred to as a memory or a storage unit. The part 630 is mainly configured to receive and send a radio frequency signal, and perform conversion between the radio frequency signal and a baseband signal. The part 630 may be usually referred to as a transceiver unit, a transceiver machine, a transceiver circuit, a transceiver, or the like. The transceiver unit in the part 630 may also be referred to as a transceiver machine, a transceiver, or the like, and includes an antenna 633 and a radio frequency circuit (not shown). The radio frequency circuit is mainly configured to perform radio frequency processing. Optionally, a component that is in the part 630 and that is configured to implement a receiving function may be considered as a receiver machine, and a component that is in the part 630 and that is configured to implement a sending function may be considered as a transmitter machine. In other words, the part 630 includes a receiver machine 632 and a transmitter machine 631. The receiver machine may also be referred to as a receiving unit, a receiver, a receiver circuit, or the like, and the transmitter may be referred to as a transmitting unit, a sending unit, a transmitter, a transmitter circuit, or the like.

The part 610 and the part 620 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards simultaneously share one or more processors.

In an implementation, the transceiver unit in the part 630 is configured to perform a receiving/sending-related process performed by the first communication apparatus or the second communication apparatus in the embodiment shown in FIG. 6. The processor in the part 610 is configured to perform a processing-related process performed by the first communication apparatus or the second communication apparatus in the embodiment shown in FIG. 6.

It should be understood that FIG. 15 is merely an example rather than a limitation. The first communication apparatus or the second communication apparatus that includes the processor, the memory, and the transceiver may not depend on the structure shown in FIG. 15.

When the communication apparatus 600 is a chip, the chip includes a transceiver, a memory, and a processor. The transceiver may be an input/output circuit or a communication interface. The processor is a processor, a microprocessor, or an integrated circuit integrated on the chip. A sending operation of the first communication apparatus or the second communication apparatus in the foregoing method embodiments may be understood as an output of the chip, and a receiving operation of the first communication apparatus or the second communication apparatus in the foregoing method embodiments may be understood as an input of the chip.

For example, this application further provides a readable storage medium, and the readable storage medium stores an executable program or instructions for implementing the method performed by the first communication apparatus or the method performed by the second communication apparatus in the foregoing method embodiments.

For example, when the executable program or instructions are executed by a computer, the computer is caused to implement the method performed by the first communication apparatus or the method performed by the second communication apparatus in the foregoing method embodiments.

For example, this application further provides a computer program product including instructions. When the instructions are executed by a computer, the computer is caused to implement the method performed by the first communication apparatus or the method performed by the second communication apparatus in the foregoing method embodiments.

For example, this application further provides a communication system. The communication system includes a first communication apparatus and a second communication apparatus. The first communication apparatus is configured to perform a process performed by the first communication apparatus in the foregoing embodiments. The second communication apparatus is configured to perform a process performed by the second communication apparatus in the foregoing embodiments.

For example, this application further provides a chip apparatus, including a processor, configured to invoke an executable program or instructions stored in a memory, to cause the processor to perform the method in the foregoing embodiments.

In a possible implementation, an input of the chip apparatus corresponds to a receiving operation in the embodiment shown in FIG. 6, and an output of the chip apparatus corresponds to a sending operation in the embodiment shown in FIG. 6.

Optionally, the processor is coupled to the memory through an interface.

Optionally, the chip apparatus further includes the memory. The memory is configured to store the executable program or the instructions.

The processor mentioned anywhere above may be a general-purpose central processing unit, a microprocessor, a baseband processor, an application-specific integrated circuit (application-specific integrated circuit, ASIC), or one or more integrated circuits configured to control program execution of the method in the foregoing embodiments. The memory mentioned anywhere above may be a read-only memory (read-only memory, ROM), another type of static storage device that can store static information and instructions, a random access memory (random access memory, RAM), or the like.

It may be clearly understood by a person skilled in the art that, for convenience and brevity of description, for explanations and beneficial effect of related content in any one of the communication apparatuses provided above, refer to the corresponding method embodiments provided above. Details are not described herein again.

In this application, the first communication apparatus or the second communication apparatus may include a hardware layer, an operating system layer running on the hardware layer, and an application layer running on the operating system layer. The hardware layer may include hardware such as a central processing unit (central processing unit, CPU), a memory management unit (memory management unit, MMU), and memory (or referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the part that essentially contributes to the technical solutions of this application or all or some of the technical solutions may be implemented in a form of a software product. The computer software product is stored in a storage medium, and includes several instructions for enabling a computer device (which may be a personal computer, a server, a network device, or the like) to perform all or some processes of the methods in embodiments of this application. The foregoing storage medium includes any medium that can store program code, such as a USB flash drive, a removable hard disk, a read-only memory, a random access memory, a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the scope of the technical solutions of embodiments of this application.

## Claims

1. A cross-carrier scheduling method, wherein the method comprises:
receiving, by a first communication apparatus, indication information sent by a second communication apparatus, wherein the indication information is used to determine one cell of a plurality of cells as a primary cell or a scheduling cell; and
monitoring, by the first communication apparatus, a physical downlink control channel in one cell of the plurality of cells based on a 1^{st} parameter set, wherein the 1^{st} parameter set is a parameter set that is in a plurality of parameter sets of a scheduled cell and that has an association relationship with one cell of the plurality of cells, parameters in the plurality of parameter sets of the scheduled cell are parameters in a search space set, and the plurality of parameter sets of the scheduled cell have an association relationship with the plurality of cells.

2. The method according to claim 1, wherein before monitoring, by the first communication apparatus, the physical downlink control channel in one cell of the plurality of cells based on the 1^{st} parameter set, the method further comprises:
receiving, by the first communication apparatus, first configuration information sent by the second communication apparatus, wherein the plurality of parameter sets of the scheduled cell are configured by using the first configuration information.

3. The method according to claim 1 or 2, wherein before receiving, by the first communication apparatus, the indication information sent by the second communication apparatus, the method further comprises:
receiving, by the first communication apparatus, second configuration information sent by the second communication apparatus, wherein the second configuration information is used to configure the plurality of cells.

4. A cross-carrier scheduling method, wherein the method comprises:
sending, by a second communication apparatus, indication information to a first communication apparatus, wherein the indication information is used to determine one cell of a plurality of cells as a primary cell or a scheduling cell; and
sending, by the second communication apparatus, downlink control information carried on a physical downlink control channel to the first communication apparatus in one cell of the plurality of cells based on a 1^{st} parameter set, wherein the 1^{st} parameter set is a parameter set that is in a plurality of parameter sets of a scheduled cell and that has an association relationship with one cell of the plurality of cells, parameters in the plurality of parameter sets of the scheduled cell are parameters in a search space set, and the plurality of parameter sets of the scheduled cell have an association relationship with the plurality of cells.

5. The method according to claim 4, wherein before sending, by the second communication apparatus, the downlink control information carried on the physical downlink control channel to the first communication apparatus in one cell of the plurality of cells based on the 1^{st} parameter set, the method further comprises:
sending, by the second communication apparatus, first configuration information to the first communication apparatus, wherein the plurality of parameter sets of the scheduled cell are configured by using the first configuration information.

6. The method according to claim 4 or 5, wherein before sending, by the second communication apparatus, the indication information to the first communication apparatus, the method further comprises:
sending, by the second communication apparatus, second configuration information to the first communication apparatus, wherein the second configuration information is used to configure the plurality of cells.

7. The method according to any one of claims 1 to 6, wherein the plurality of parameter sets of the scheduled cell are a plurality of search space set groups of the scheduled cell, one of the search space set groups comprises one or more search space sets, and the search space set comprises at least a first parameter and a second parameter, wherein the first parameter indicates an identity of the search space set, and the second parameter indicates an aggregation level of the physical downlink control channel and a quantity of physical downlink control channel candidates corresponding to the aggregation level.

8. The method according to claim 7, wherein
identities of search space sets in the plurality of search space set groups are the same, a quantity of the search space set groups is equal to a quantity of the plurality of cells, and each search space set group has an association relationship with one cell of the plurality of cells;
identities of search space sets in the plurality of search space set groups are the same, a quantity of the search space set groups is less than a quantity of the plurality of cells, and each search space set group has an association relationship with one or more cells of the plurality of cells; or
identities of search space sets in the plurality of search space set groups are different, and the identity of the search space set is used to determine a cell that is in the plurality of cells and that has an association relationship with the search space set.

9. The method according to any one of claims 1 to 6, wherein the plurality of parameter sets of the scheduled cell are configured in one search space set of the scheduled cell, and the search space set comprises at least a first parameter and a plurality of second parameters, wherein the first parameter indicates an identity of the search space set, and each of the second parameters indicates an aggregation level of the physical downlink control channel and a quantity of physical downlink control channel candidates corresponding to the aggregation level.

10. The method according to claim 9, wherein
a quantity of the second parameters is equal to a quantity of the plurality of cells, and each second parameter has an association relationship with one cell of the plurality of cells; or
a quantity of the second parameters is less than a quantity of the plurality of cells, and each second parameter has an association relationship with one or more cells of the plurality of cells.

11. The method according to any one of claims 1 to 6, wherein the plurality of parameter sets of the scheduled cell are configured by using a plurality of bandwidth parts of the scheduled cell, configuration information of one of the bandwidth parts comprises one or more search space sets, and the search space set comprises at least a first parameter and a second parameter, wherein the first parameter indicates an identity of the search space set, and the second parameter indicates an aggregation level of the physical downlink control channel and a quantity of physical downlink control channel candidates corresponding to the aggregation level.

12. The method according to claim 11, wherein
a quantity of the bandwidth parts is equal to a quantity of the plurality of cells, and each bandwidth part has an association relationship with one cell of the plurality of cells; or
a quantity of the bandwidth parts is less than a quantity of the plurality of cells, and each bandwidth part has an association relationship with one or more cells of the plurality of cells.

13. The method according to any one of claims 1 to 12, wherein the indication information is carried in the downlink control information or medium access control-control element signaling.

14. The method according to any one of claims 1 to 13, wherein the configuration information is carried in radio resource control signaling.

15. A communication apparatus, wherein the apparatus comprises a module configured to perform the method according to any one of claims 1 to 3 and 7 to 14, or a module configured to perform the method according to any one of claims 4 to 14.

16. A communication system, wherein the communication system comprises the first communication apparatus configured to perform the method according to any one of claims 1 to 3 and 7 to 14, and the second communication apparatus configured to perform the method according to any one of claims 4 to 14.

17. A communication apparatus, comprising a processor, wherein
the processor is configured to execute an executable program or instructions in a memory, to cause the communication apparatus to perform the method according to any one of claims 1 to 3 and 7 to 14, or cause the communication apparatus to perform the method according to any one of claims 4 to 14.

18. A chip, comprising an interface circuit and a logic circuit, wherein the interface circuit is configured to receive a signal from a chip other than the chip and transmit the signal to the logic circuit, or send a signal from the logic circuit to a chip other than the chip; and the logic circuit is configured to implement the method according to any one of claims 1 to 3 and 7 to 14, or the logic circuit is configured to implement the method according to any one of claims 4 to 14.

19. A readable storage medium, wherein the readable storage medium stores an executable program or instructions, and the executable program or the instructions are set to perform the method according to any one of claims 1 to 3 and 7 to 14, or the executable program or the instructions are set to perform the method according to any one of claims 4 to 14.
